# EUROPEAN PATENT SPECIFICATION

(11) **EP 3 723 295 B1**
(45) Date of publication and mention of the grant of the patent: **18.01.2023**
(21) Application number: 18893443.4
(22) Date of filing: 23.10.2018
(51) Int. Cl.: H04B 1/525, H04M 11/06

(54) **TRANSMITTING DEVICE AND SIGNAL TRANSMISSION METHOD**
ÜBERTRAGUNGSVORRICHTUNG UND SIGNALÜBERTRAGUNGSVERFAHREN
DISPOSITIF DE TRANSMISSION ET PROCÉDÉ DE TRANSMISSION DE SIGNAL

(30) Priority: 26.12.2017 CN 201711442840
(43) Date of publication of application: 14.10.2020
(73) Proprietor: HUAWEI TECHNOLOGIES CO., LTD., Shenzhen, Guangdong 518129 (CN)
(72) Inventor: ZHAO, Zhilei, Shenzhen, Guangdong 518129 (CN); LI, Dong, Shenzhen, Guangdong 518129 (CN)
(74) Representative: Maiwald GmbH
(86) International application number: PCT/CN2018/111347
(87) International publication number: WO 2019/128415

(56) References cited:
- CN-A- 101 277 420
- CN-A- 101 945 309
- CN-A- 104 639 241
- CN-U- 202 617 112
- US-A1- 2014 029 694
- US-B1- 6 583 662

## Description

### TECHNICAL FIELD

This application relates to the communications field, and in particular, to a sending apparatus and a signal transmission method.

### BACKGROUND

x digital subscriber line (xDSL) is a technology for transmitting data over a twisted pair, and includes asymmetric digital subscriber line (ADSL), very high speed digital subscriber line (VDSL), V35, and the like.

xDSL performs upstream and downstream frequency band division in a frequency division multiplexing mode. For example, a frequency band in V35 is divided into three upstream frequency bands US0, US1, and US2, and three downstream frequency bands DS1, DS2, and DS3. US0 corresponds to 25-138 kHz, DS1 corresponds to 138 kHz-3.75 MHz, US1 corresponds to 3.75-5.2 MHz, DS2 corresponds to 5.2-8.5 MHz, US2 corresponds to 8.5-12 MHz, and DS3 corresponds to 12-35 MHz. It can be learned that the upstream and downstream frequency bands are alternate. When upstream and downstream signals are simultaneously transmitted, the upstream signal transmission causes unwanted interference to the downstream frequency band.

An upstream signal needs to sequentially pass through a digital front end (DFE), an analog front end (AFE), a line driver (LD) module, and a hybrid (H) circuit in a user terminal, and then is transmitted to a twisted pair. In the prior art, interference from the upstream signal transmission in the user terminal to a downstream frequency band is usually reduced by increasing a suppression ratio of the H circuit. However, device discreteness and a cable impedance change greatly affect a suppression effect of the H circuit, and therefore an interference suppression effect is poor.

US6583662B1 describes a continuous-time smoothing filter circuit and method for implementing the same. The circuit may be implemented as a cascade of two sections. The first section may comprise two programmable 3rd order low-pass filters, each filter having a low Q value complex pole pair, as well as, a negative real pole. The second section may comprise an output stage amplifier having a low output impedance in order to drive external loads. Each of the 3rd order low-pass filters may be under programmable control to select and coarsely tune the cut-off frequency for each of the two filters. The method can be described as: processing a digital to analog converter generated output signal with a first 3rd order low-pass filter; processing a first output signal provided by the first 3rd order low-pass filter with a second 3rd order low-pass filter; and processing a second output signal provided by the second 3rd order low-pass filter with a low-output impedance amplifier.

CN101277420A1 relates to a cable television network bidirectional accessing derive which belongs to the field of communication technology. The device comprises an ONU module, an EoC module and a power supplying module. The ONU module is connected to the EoC module via the system bus connecting cable; and the ONU module and the EoC module are simultaneously connected to the power supplying module; the power supplying module is connected with a power source outside; a single optical fiber is accessed by the ONU module; the input end of the EoC module is connecting the external coaxial cable. The device can implement the transceiving only by a single-core optical fiber. The power source module can select 220V alternative municipal current for the power supplying, also can select coaxial cable 60V alternative feeding for the power supplying, and it is described that this simultaneously achieves the management for the devices on the different physical medium for one network managing software. It is described that the device can rapidly move the data on the frequency which is badly influenced by the noise to the other frequency to achieve the quick bandwidth recovery after the noise is happened.

### SUMMARY

Embodiments of this application provide a sending apparatus and a signal transmission method, to reduce interference from upstream signal transmission to a downstream frequency band. In a first aspect, there is provided a sending apparatus as defined in appended claim 1.

In a second aspect, there is provided a sending apparatus as defined in appended claim 7.

In a third aspect, there is provided a signal transmission method as defined in appended claim 13.

In view of this, a first example of the embodiments of this application provides a sending apparatus, including an analog front end AFE and a line driver LD module. An output terminal of the AFE is connected to an input terminal of the LD module. The AFE includes at least one low-pass filter LPF, and a filtering frequency is set for each LPF.

The AFE is configured to obtain a first signal, and filter out, by using the LPF, a signal with a frequency greater than the filtering frequency from the first signal, to obtain a second signal. The LD module is configured to receive the second signal.

It may be understood that a same filtering frequency or different filtering frequencies may be set for different LPFs.

With reference to the first example of the embodiments of this application, in a first implementation of the first example of the embodiments of this application, the AFE includes a first LPF, a stable voltage source, a first operational amplifier, and a second operational amplifier.

The first LPF includes a first resistor, a second resistor, a first capacitor, a second capacitor, a first switch, and a second switch. The first switch and the second switch are closed to turn on the first LPF, and the first switch and the second switch are opened to turn off the first LPF. A first filtering frequency is set for the first LPF.

One terminal of the first resistor is connected to an output terminal of the first operational amplifier, the other end of the first resistor is connected to one terminal of the first capacitor, the other end of the first capacitor is connected to one terminal of the first switch, and the other end of the first switch is connected to the stable voltage source.

One terminal of the second resistor is connected to an output terminal of the second operational amplifier, the other end of the second resistor is connected to one terminal of the second capacitor, the other end of the second capacitor is connected to one terminal of the second switch, and the other end of the second switch is connected to the stable voltage source.

With reference to the first example of the embodiments of this application, in a second implementation of the first example of the embodiments of this application, the AFE includes a second LPF, a first operational amplifier, and a second operational amplifier.

The second LPF includes a first resistor, a second resistor, a third capacitor, and a third switch. The third switch is closed to turn on the second LPF, and the third switch is opened to turn off the second LPF. A second filtering frequency is set for the second LPF.

One terminal of the first resistor is connected to an output terminal of the first operational amplifier, the other end of the first resistor is connected to one terminal of the third capacitor, the other end of the third capacitor is connected to one terminal of the third switch, the other end of the third switch is connected to one terminal of the second resistor, and the other end of the second resistor is connected to an output terminal of the second operational amplifier.

With reference to the first implementation of the first example of the embodiments of this application, in a third implementation of the first example of the embodiments of this application, the AFE further includes a third LPF.

The third LPF includes the first resistor, the second resistor, and a fourth capacitor, and a third filtering frequency is set for the third LPF.

The terminal of the first resistor is connected to the output terminal of the first operational amplifier. The other end of the first resistor is connected to the terminal of the first capacitor, where a connection point is connected to one terminal of the fourth capacitor. The other end of the first capacitor is connected to the terminal of the first switch. The other end of the first switch is connected to the stable voltage source.

The terminal of the second resistor is connected to the output terminal of the second operational amplifier. The other end of the second resistor is connected to the terminal of the second capacitor, where a connection point is connected to the other end of the fourth capacitor. The other end of the second capacitor is connected to the terminal of the second switch. The other end of the second switch is connected to the stable voltage source.

With reference to the second implementation of the first example of the embodiments of this application, in a fourth implementation of the first example of the embodiments of this application, the AFE further includes a third LPF.

The third LPF includes the first resistor, the second resistor, and a fourth capacitor, and a third filtering frequency is set for the third LPF.

The terminal of the first resistor is connected to the output terminal of the first operational amplifier. The other end of the first resistor is connected to the terminal of the third capacitor, where a connection point is connected to one terminal of the fourth capacitor. The other end of the third capacitor is connected to the terminal of the third switch. The other end of the third switch is connected to the terminal of the second resistor, where a connection point is connected to the other end of the fourth capacitor. The other end of the second resistor is connected to the output terminal of the second operational amplifier.

With reference to the first example of the embodiments of this application, the first implementation of the first example of the embodiments of this application, the second implementation of the first example of the embodiments of this application, the third implementation of the first example of the embodiments of this application, or the fourth implementation of the first example of the embodiments of this application, in a fifth implementation of the first example of the embodiments of this application, the LD module includes a third operational amplifier, a fourth operational amplifier, a third resistor, a fourth LPF, and a fifth LPF.

The fourth LPF includes a fourth resistor, a fifth capacitor, and a fourth switch. The fourth switch is closed to turn on the fourth LPF, and the fourth switch is opened to turn off the fourth LPF. A fourth filtering frequency is set for the fourth LPF.

The fifth LPF includes a fifth resistor, a sixth capacitor, and a fifth switch. The fifth switch is closed to turn on the fifth LPF, and the fifth switch is opened to turn off the fifth LPF. A fifth filtering frequency is set for the fifth LPF.

An output terminal of the third operational amplifier is connected to one terminal of the fourth resistor, where a connection point is connected to one terminal of the fifth capacitor. The other end of the fourth resistor is connected to one input terminal of the third operational amplifier, where a connection point is connected to one terminal of the fourth switch and one terminal of the third resistor. The other end of the fourth switch is connected to the other end of the fifth capacitor.

An output terminal of the fourth operational amplifier is connected to one terminal of the fifth resistor, where a connection point is connected to one terminal of the sixth capacitor. The other end of the fifth resistor is connected to one input terminal of the fourth operational amplifier, where a connection point is connected to one terminal of the fifth switch and the other end of the third resistor. The other end of the fifth switch is connected to the other end of the sixth capacitor.

With reference to the fifth implementation of the first example of the embodiments of this application, in a sixth implementation of the first example of the embodiments of this application, the LD module further includes a sixth LPF and a seventh LPF.

The sixth LPF includes the fourth resistor and a seventh capacitor, and a sixth filtering frequency is set for the sixth LPF.

The seventh LPF includes the fifth resistor and an eighth capacitor, and a seventh filtering frequency is set for the seventh LPF.

The output terminal of the third operational amplifier is connected to the terminal of the fourth resistor, where the connection point is connected to the terminal of the fifth capacitor and one terminal of the seventh capacitor. The other end of the fourth resistor is connected to the input terminal of the third operational amplifier, where the connection point is connected to the terminal of the fourth switch, the terminal of the third resistor, and the other end of the seventh capacitor. The other end of the fourth switch is connected to the other end of the fifth capacitor. The output terminal of the fourth operational amplifier is connected to the terminal of the fifth resistor, where the connection point is connected to the terminal of the sixth capacitor and one terminal of the eighth capacitor. The other end of the fifth resistor is connected to the input terminal of the fourth operational amplifier, where the connection point is connected to the terminal of the fifth switch, the other end of the third resistor, and the other end of the eighth capacitor. The other end of the fifth switch is connected to the other end of the sixth capacitor. A second example of the embodiments of this application provides a sending apparatus, including an analog front end AFE and a line driver LD module. An output terminal of the AFE is connected to an input terminal of the LD module. The LD module includes at least one low-pass filter LPF, and a filtering frequency is set for each LPF.

The AFE is configured to obtain a first signal, and send the first signal to the LD module. The LD module is configured to receive the first signal, and filter out, by using the LPF, a signal with a frequency greater than the filtering frequency from the first signal, to obtain a second signal.

It may be understood that a same filtering frequency or different filtering frequencies may be set for different LPFs.

With reference to the second example of the embodiments of this application, in a first implementation of the second example of the embodiments of this application, the LD module includes a third operational amplifier, a fourth operational amplifier, a third resistor, a fourth LPF, and a fifth LPF.

The fourth LPF includes a fourth resistor, a fifth capacitor, and a fourth switch. The fourth switch is closed to turn on the fourth LPF, and the fourth switch is opened to turn off the fourth LPF. A fourth filtering frequency is set for the fourth LPF.

The fifth LPF includes a fifth resistor, a sixth capacitor, and a fifth switch. The fifth switch is closed to turn on the fifth LPF, and the fifth switch is opened to turn off the fifth LPF. A fifth filtering frequency is set for the fifth LPF.

An output terminal of the third operational amplifier is connected to one terminal of the fourth resistor, where a connection point is connected to one terminal of the fifth capacitor. The other end of the fourth resistor is connected to one input terminal of the third operational amplifier, where a connection point is connected to one terminal of the fourth switch and one terminal of the third resistor. The other end of the fourth switch is connected to the other end of the fifth capacitor.

An output terminal of the fourth operational amplifier is connected to one terminal of the fifth resistor, where a connection point is connected to one terminal of the sixth capacitor. The other end of the fifth resistor is connected to one input terminal of the fourth operational amplifier, where a connection point is connected to one terminal of the fifth switch and the other end of the third resistor. The other end of the fifth switch is connected to the other end of the sixth capacitor.

With reference to the first implementation of the second example of the embodiments of this application, in a second implementation of the second example of the embodiments of this application, the LD module further includes a sixth LPF and a seventh LPF.

The sixth LPF includes the fourth resistor and a seventh capacitor, and a sixth filtering frequency is set for the sixth LPF.

The seventh LPF includes the fifth resistor and an eighth capacitor, and a seventh filtering frequency is set for the seventh LPF.

The output terminal of the third operational amplifier is connected to the terminal of the fourth resistor, where the connection point is connected to the terminal of the fifth capacitor and one terminal of the seventh capacitor. The other end of the fourth resistor is connected to the input terminal of the third operational amplifier, where the connection point is connected to the terminal of the fourth switch, the terminal of the third resistor, and the other end of the seventh capacitor. The other end of the fourth switch is connected to the other end of the fifth capacitor. The output terminal of the fourth operational amplifier is connected to the terminal of the fifth resistor, where the connection point is connected to the terminal of the sixth capacitor and one terminal of the eighth capacitor. The other end of the fifth resistor is connected to the input terminal of the fourth operational amplifier, where the connection point is connected to the terminal of the fifth switch, the other end of the third resistor, and the other end of the eighth capacitor. The other end of the fifth switch is connected to the other end of the sixth capacitor. With reference to the second example of the embodiments of this application, the first implementation of the second example of the embodiments of this application, or the second implementation of the second example of the embodiments of this application, in a third implementation of the second example of the embodiments of this application, the AFE includes a first LPF, a stable voltage source, a first operational amplifier, and a second operational amplifier.

The first LPF includes a first resistor, a second resistor, a first capacitor, a second capacitor, a first switch, and a second switch. The first switch and the second switch are closed to turn on the first LPF, and the first switch and the second switch are opened to turn off the first LPF. A first filtering frequency is set for the first LPF.

One terminal of the first resistor is connected to an output terminal of the first operational amplifier, the other end of the first resistor is connected to one terminal of the first capacitor, the other end of the first capacitor is connected to one terminal of the first switch, and the other end of the first switch is connected to the stable voltage source.

One terminal of the second resistor is connected to an output terminal of the second operational amplifier, the other end of the second resistor is connected to one terminal of the second capacitor, the other end of the second capacitor is connected to one terminal of the second switch, and the other end of the second switch is connected to the stable voltage source.

With reference to the second example of the embodiments of this application, the first implementation of the second example of the embodiments of this application, or the second implementation of the second example of the embodiments of this application, in a fourth implementation of the second example of the embodiments of this application, the AFE includes a second LPF, a first operational amplifier, and a second operational amplifier.

The second LPF includes a first resistor, a second resistor, a third capacitor, and a third switch. The third switch is closed to turn on the second LPF, and the third switch is opened to turn off the second LPF. A second filtering frequency is set for the second LPF.

One terminal of the first resistor is connected to an output terminal of the first operational amplifier, the other end of the first resistor is connected to one terminal of the third capacitor, the other end of the third capacitor is connected to one terminal of the third switch, the other end of the third switch is connected to one terminal of the second resistor, and the other end of the second resistor is connected to an output terminal of the second operational amplifier.

With reference to the third implementation of the second example of the embodiments of this application, in a fifth implementation of the second example of the embodiments of this application, the AFE further includes a third LPF.

The third LPF includes the first resistor, the second resistor, and a fourth capacitor, and a third filtering frequency is set for the third LPF.

The terminal of the first resistor is connected to the output terminal of the first operational amplifier. The other end of the first resistor is connected to the terminal of the first capacitor, where a connection point is connected to one terminal of the fourth capacitor. The other end of the first capacitor is connected to the terminal of the first switch. The other end of the first switch is connected to the stable voltage source.

The terminal of the second resistor is connected to the output terminal of the second operational amplifier. The other end of the second resistor is connected to the terminal of the second capacitor, where a connection point is connected to the other end of the fourth capacitor. The other end of the second capacitor is connected to the terminal of the second switch. The other end of the second switch is connected to the stable voltage source.

With reference to the fourth implementation of the second example of the embodiments of this application, in a sixth implementation of the second example of the embodiments of this application, the AFE further includes a third LPF.

The third LPF includes the first resistor, the second resistor, and a fourth capacitor, and a third filtering frequency is set for the third LPF.

The terminal of the first resistor is connected to the output terminal of the first operational amplifier. The other end of the first resistor is connected to the terminal of the third capacitor, where a connection point is connected to one terminal of the fourth capacitor. The other end of the third capacitor is connected to the terminal of the third switch. The other end of the third switch is connected to the terminal of the second resistor, where a connection point is connected to the other end of the fourth capacitor. The other end of the second resistor is connected to the output terminal of the second operational amplifier.

A third example of the embodiments of this application provides a signal transmission method, including:
obtaining a first signal;
filtering out, by using a low-pass filter LPF, a signal with a frequency greater than the filtering frequency from the first signal, to obtain a second signal, where the filtering frequency is set for the LPF; and
outputting the second signal.

With reference to the third example of the embodiments of this application, in a first implementation of the third example of the embodiments of this application, the filtering out, by using an LPF, a signal with a frequency greater than the filtering frequency from the first signal, to obtain a second signal includes:
determining the filtering frequency based on a transmission frequency band for the first signal, where the filtering frequency is greater than or equal to a highest frequency of the transmission frequency band; and
turning on the LPF corresponding to the filtering frequency, and filtering the first signal to obtain the second signal.

It can be learned from the foregoing technical solutions that the embodiments of this application have the following advantages:
The embodiments provide the sending apparatus, including the AFE and the LD module. The output terminal of the AFE is connected to the input terminal of the LD module. The AFE includes the at least one LPF, and the filtering frequency is set for each LPF. The AFE is configured to obtain the first signal, and filter out, by using the LPF, a signal with a frequency greater than the filtering frequency from the first signal, to obtain the second signal. The LD module is configured to receive the second signal. It can be learned that some signals with frequencies greater than the filtering frequency of the LPF are filtered out of an upstream signal transmitted by the sending apparatus. This effectively reduces interference from the upstream signal transmission to the downstream frequency band.

### BRIEF DESCRIPTION OF DRAWINGS

FIG. 1 is a schematic diagram of frequency band division in V35;
FIG. 2 is a schematic diagram of a flow direction of an upstream signal in a user terminal;
FIG. 3 is a schematic diagram of an embodiment of a sending apparatus according to this application;
FIG. 4 is a schematic diagram of another embodiment of a sending apparatus according to this application;
FIG. 5 is a schematic diagram of still another embodiment of a sending apparatus according to this application;
FIG. 6 is a schematic diagram of yet another embodiment of a sending apparatus according to this application;
FIG. 7 is a schematic diagram of still yet another embodiment of a sending apparatus according to this application;
FIG. 8 is a schematic diagram of a further embodiment of a sending apparatus according to this application;
FIG. 9 is a schematic diagram of a still further embodiment of a sending apparatus according to this application;
FIG. 10 is a schematic diagram of a yet further embodiment of a sending apparatus according to this application; and
FIG. 11 is a schematic diagram of an embodiment of a signal transmission method according to this application.

### DESCRIPTION OF EMBODIMENTS

Embodiments of this application provide a sending apparatus and a signal transmission method, to reduce interference from upstream signal transmission to a downstream frequency band.

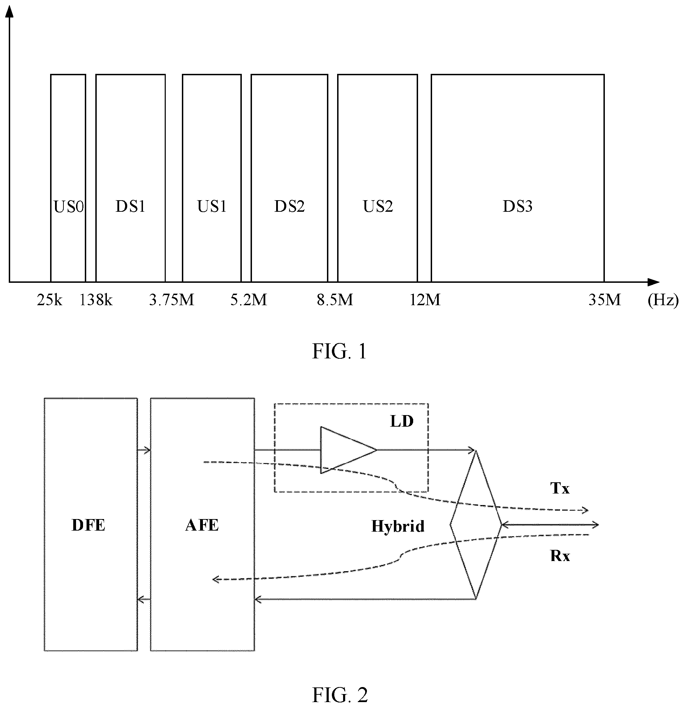

The embodiments of this application are implemented based on an xDSL technology. xDSL includes ADSL, VDSL, V35, and the like. xDSL performs upstream and downstream frequency band division in a frequency division multiplexing mode. As shown in FIG. 1, a frequency band in V35 is divided into three upstream frequency bands US0, US1, and US2, and three downstream frequency bands DS1, DS2, and DS3. The upstream frequency band is a frequency band for a signal sent by customer-premises equipment to a central office device, and the downstream frequency band is a frequency band for a signal sent by the central office device to the customer-premises equipment. Upstream and downstream signals are simultaneously transmitted, and the frequency bands are alternate. When the customer-premises equipment sends an upstream signal, unwanted noise is generated in a downstream frequency band, and the noise affects performance of a downstream receive frequency band.

The sending apparatus in the embodiments of this application may be customer-premises equipment. When the customer-premises equipment sends an upstream signal, the signal flows in a direction shown in FIG. 2. A DFE modulates digital information and sends a modulated signal to an AFE. The AFE converts the digital signal into an analog signal and sends the analog signal to an LD module. The LD module amplifies the signal sent by the AFE and sends an amplified signal to an H circuit. The signal is finally output to a twisted pair.

To effectively reduce interference from upstream signal transmission to a downstream frequency band, in the embodiments of this application, a low-pass filter (LPF) is disposed in the AFE and/or the LD module in the sending apparatus, to filter out some signals with frequencies greater than a filtering frequency of the LPF. It may be understood that, in the embodiments of this application, the LPF may be disposed in a plurality of manners. The following separately provides descriptions with reference to the accompanying drawings.

### 1. At least one LPF is disposed in an AFE.

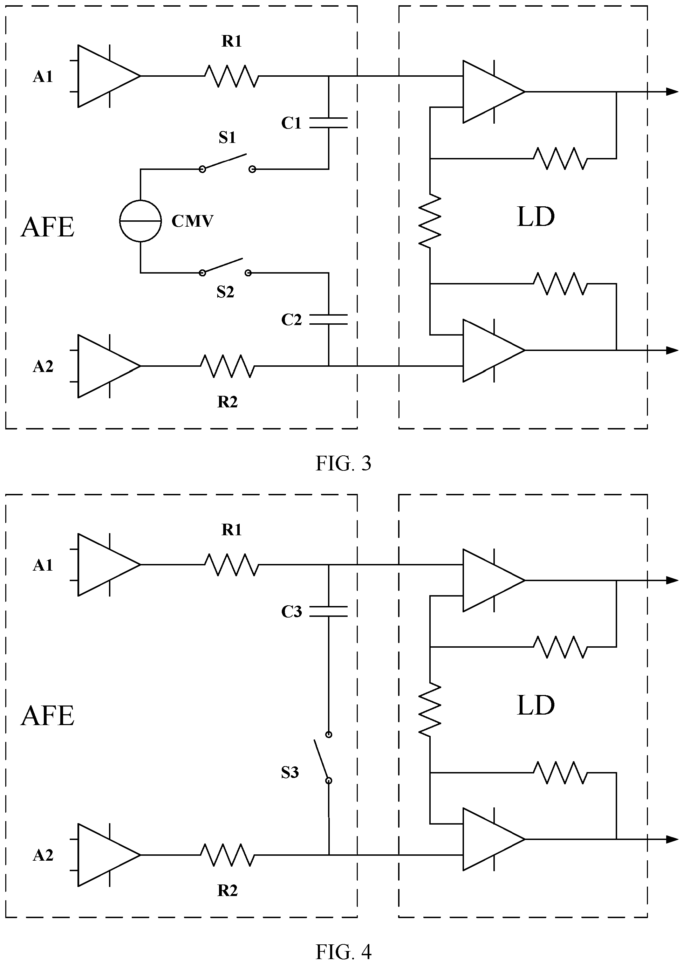

Referring to FIG. 3, an AFE of a sending apparatus in an embodiment of this application includes:
a stable voltage source, a first operational amplifier A1, a second operational amplifier A2, and a first LPF. The first LPF specifically includes a first resistor R1, a second resistor R2, a first capacitor C1, a second capacitor C2, a first switch S1, and a second switch S2. It may be understood that the stable voltage source usually provides a direct current working voltage of an amplifier circuit, namely, a common-mode voltage (CMV). Therefore, the CMV may be used to represent the stable voltage source in the embodiments of this application. This is described herein and is not repeated subsequently.

The first switch S1 and the second switch S2 are closed to turn on the first LPF, and the first switch S1 and the second switch S2 are opened to turn off the first LPF. A first filtering frequency is set for the first LPF.

One terminal of the first resistor R1 is connected to an output terminal of the first operational amplifier A1, the other end of the first resistor R1 is connected to one terminal of the first capacitor C1, the other end of the first capacitor C1 is connected to one terminal of the first switch S1, and the other end of the first switch S1 is connected to the CMV.

One terminal of the second resistor R2 is connected to an output terminal of the second operational amplifier A2, the other end of the second resistor R2 is connected to one terminal of the second capacitor C2, the other end of the second capacitor C2 is connected to one terminal of the second switch S2, and the other end of the second switch S2 is connected to the CMV.

In this embodiment of this application, the AFE obtains a first signal from a DFE, filters out, by using the first LPF, a signal with a frequency greater than the first filtering frequency from the first signal, to obtain a second signal, and outputs the second signal to an LD module.

Specifically, the first filtering frequency may be set to 138 kHz. When a signal is transmitted for a long distance, only the upstream frequency band US0 is used. In this case, the first switch S1 and the second switch S2 are controlled to be closed, so that the first LPF takes effect to filter out a signal with a frequency greater than 138 kHz. When a signal is transmitted for a short distance, the upstream frequency bands US0, US1, and US2 are all used. In this case, the first switch S1 and the second switch S2 are controlled to be opened, so that the first LPF becomes ineffective, to ensure that a full-band signal can be normally sent.

It may be understood that the first filtering frequency may be set to another value different from 138 kHz, for example, be set to 5.2 MHz. This is not specifically limited herein.

This embodiment provides the sending apparatus, including the AFE and the LD module. An output terminal of the AFE is connected to an input terminal of the LD module. The AFE includes the at least one LPF, and a filtering frequency is set for each LPF. The AFE is configured to obtain the first signal, and filter out, by using the LPF, a signal with a frequency greater than the filtering frequency from the first signal, to obtain the second signal. The LD module is configured to receive the second signal. It can be learned that some signals with frequencies greater than the filtering frequency of the LPF are filtered out of an upstream signal transmitted by the sending apparatus. This effectively reduces interference from the upstream signal transmission to a downstream frequency band.

It should be noted that, in the AFE, the first LPF may be replaced by a second LPF to achieve a same filtering effect. Referring to FIG. 4, an AFE includes a first operational amplifier A1, a second operational amplifier A2, and the second LPF. The second LPF includes a first resistor R1, a second resistor R2, a third capacitor C3, and a third switch S3.

The third switch S3 is closed to turn on the second LPF, and the third switch S3 is opened to turn off the second LPF. A second filtering frequency is set for the second LPF.

One terminal of the first resistor R1 is connected to an output terminal of the first operational amplifier A1, the other end of the first resistor R1 is connected to one terminal of the third capacitor C3, the other end of the third capacitor C3 is connected to one terminal of the third switch S3, the other end of the third switch S3 is connected to one terminal of the second resistor R2, and the other end of the second resistor R2 is connected to an output terminal of the second operational amplifier A2.

In this embodiment of this application, the AFE obtains a first signal from a DFE, filters out, by using the second LPF, a signal with a frequency greater than the second filtering frequency from the first signal, to obtain a second signal, and outputs the second signal to an LD module. A description of the second filtering frequency is similar to that of the first filtering frequency in the embodiment shown in FIG. 3, and details are not described herein again.

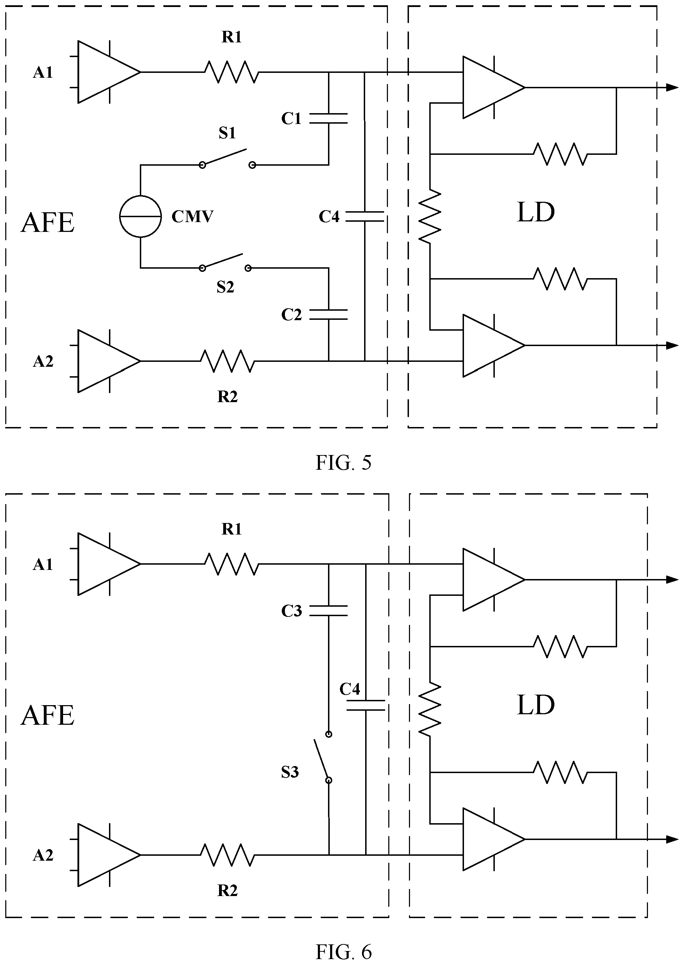

It should be noted that the AFE may alternatively include two LPFs. Referring to FIG. 5, an AFE further includes a third LPF. The third LPF includes the first resistor R1, the second resistor R2, and a fourth capacitor C4, and a third filtering frequency is set for the third LPF.

The terminal of the first resistor R1 is connected to the output terminal of the first operational amplifier A1. The other end of the first resistor R1 is connected to the terminal of the first capacitor C1, where a connection point is connected to one terminal of the fourth capacitor C4. The other end of the first capacitor C1 is connected to the terminal of the first switch S1. The other end of the first switch S1 is connected to the CMV.

The terminal of the second resistor R2 is connected to the output terminal of the second operational amplifier A2. The other end of the second resistor R2 is connected to the terminal of the second capacitor C2, where a connection point is connected to the other end of the fourth capacitor C4. The other end of the second capacitor C2 is connected to the terminal of the second switch S2. The other end of the second switch S2 is connected to the CMV.

In this embodiment of this application, when the first switch S1 and the second switch S2 are opened, the AFE performs filtering by using an LPF including the first resistor R1, the second resistor R2, and the fourth capacitor C4. When the first switch S1 and the second switch S2 are closed, the AFE performs filtering by using an LPF including the first resistor R1, the second resistor R2, the first capacitor C1, the second capacitor C2, and the fourth capacitor C4. Different filtering frequencies may be set for the two LPFs, to implement different filtering effects by controlling the first switch S1 and the second switch S2 to be closed or opened. For example, a filtering frequency of an LPF that takes effect when the first switch S1 and the second switch S2 are opened is set to a comparatively large value, for example, 12 MHz, and a filtering frequency of an LPF that takes effect when the first switch S1 and the second switch S2 are closed is set to a comparatively small value, for example, 5.2 MHz. In this case, if a highest frequency band currently used by an upstream signal is US2, the first switch S1 and the second switch S2 are opened, so that the LPF that has the filtering frequency of 12 MHz takes effect. If a highest frequency band currently used by an upstream signal is US1, the first switch S1 and the second switch S2 are closed, so that the LPF that has the filtering frequency of 5.2 MHz takes effect.

Similarly, referring to FIG. 6, an AFE further includes a third LPF. The third LPF includes the first resistor R1, the second resistor R2, and a fourth capacitor C4, and a third filtering frequency is set for the third LPF.

The terminal of the first resistor R1 is connected to the output terminal of the first operational amplifier A1. The other end of the first resistor R1 is connected to the terminal of the third capacitor C3, where a connection point is connected to one terminal of the fourth capacitor C4. The other end of the third capacitor C3 is connected to the terminal of the third switch S3. The other end of the third switch S3 is connected to the terminal of the second resistor R2, where a connection point is connected to the other end of the fourth capacitor C4. The other end of the second resistor R2 is connected to the output terminal of the second operational amplifier A2. In this embodiment of this application, when the third switch S3 is opened, the AFE performs filtering by using an LPF including the first resistor R1, the second resistor R2, and the fourth capacitor C4. When the third switch is closed, the AFE performs filtering by using an LPF including the first resistor R1, the second resistor R2, the third capacitor C3, and the fourth capacitor C4. Different filtering frequencies may be set for the two LPFs, to implement different filtering effects by controlling the third switch S3 to be closed or opened. 2. At least one LPF is disposed in an LD module.

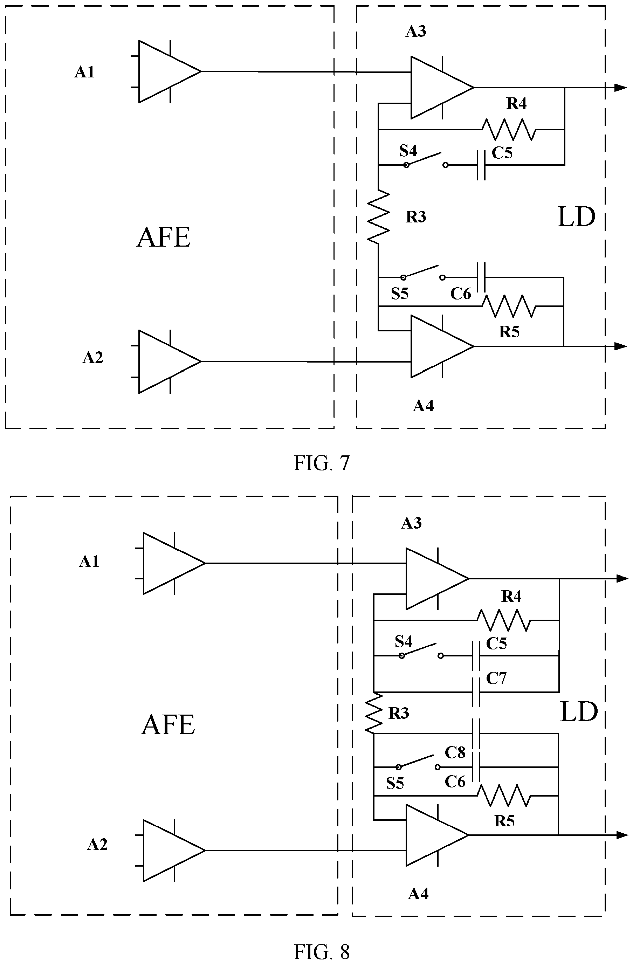

Referring to FIG. 7, an LD module of a sending apparatus in an embodiment of this application includes:
a third operational amplifier A3, a fourth operational amplifier A4, a third resistor R3, a fourth LPF, and a fifth LPF.

The fourth LPF includes a fourth resistor R4, a fifth capacitor C5, and a fourth switch S4. The fourth switch S4 is closed to turn on the fourth LPF, and the fourth switch S4 is opened to turn off the fourth LPF. A fourth filtering frequency is set for the fourth LPF.

The fifth LPF includes a fifth resistor R5, a sixth capacitor C6, and a fifth switch S5. The fifth switch S5 is closed to turn on the fifth LPF, and the fifth switch S5 is opened to turn off the fifth LPF. A fifth filtering frequency is set for the fifth LPF.

An output terminal of the third operational amplifier A3 is connected to one terminal of the fourth resistor R4, where a connection point is connected to one terminal of the fifth capacitor C5. The other end of the fourth resistor R4 is connected to one input terminal of the third operational amplifier A3, where a connection point is connected to one terminal of the fourth switch S4 and one terminal of the third resistor R3. The other end of the fourth switch S4 is connected to the other end of the fifth capacitor C5.

An output terminal of the fourth operational amplifier A4 is connected to one terminal of the fifth resistor R5, where a connection point is connected to one terminal of the sixth capacitor C6. The other end of the fifth resistor R5 is connected to one input terminal of the fourth operational amplifier A4, where a connection point is connected to one terminal of the fifth switch S5 and the other end of the third resistor R3. The other end of the fifth switch S5 is connected to the other end of the sixth capacitor C6.

In this embodiment of this application, the LD module receives a first signal sent by an AFE, filters out, by using the LPFs, a signal with a frequency greater than the filtering frequency from the first signal, to obtain a second signal, and then outputs the second signal.

It may be understood that the fourth switch S4 and the fifth switch S5 need to be simultaneously closed or opened, and a same filtering frequency is set for the fourth LPF and the fifth LPF. To be specific, the fourth LPF and the fifth LPF jointly take effect to filter the first signal.

This embodiment provides the sending apparatus, including the AFE and the LD module. An output terminal of the AFE is connected to an input terminal of the LD module. The LD module includes the at least one LPF, and a filtering frequency is set for each LPF. The AFE is configured to obtain the first signal. The LD module is configured to receive the first signal sent by the AFE, and filter out, by using the LPF, a signal with a frequency greater than the filtering frequency from the first signal, to obtain the second signal. It can be learned that some signals with frequencies greater than the filtering frequency of the LPF are filtered out of an upstream signal transmitted by the sending apparatus. This effectively reduces interference from the upstream signal transmission to a downstream frequency band.

Referring to FIG. 8, a sixth LPF and a seventh LPF may be further disposed in an LD module. The sixth LPF includes the fourth resistor R4 and a seventh capacitor C7, and a sixth filtering frequency is set for the sixth LPF.

The seventh LPF includes the fifth resistor R5 and an eighth capacitor C8, and a seventh filtering frequency is set for the seventh LPF.

The output terminal of the third operational amplifier A3 is connected to the terminal of the fourth resistor R4, where the connection point is connected to the terminal of the fifth capacitor C5 and one terminal of the seventh capacitor C7. The other end of the fourth resistor R4 is connected to the input terminal of the third operational amplifier A3, where the connection point is connected to the terminal of the fourth switch S4, the terminal of the third resistor R3, and the other end of the seventh capacitor C7. The other end of the fourth switch S4 is connected to the other end of the fifth capacitor C5.

The output terminal of the fourth operational amplifier A4 is connected to the terminal of the fifth resistor R5, where the connection point is connected to the terminal of the sixth capacitor C6 and one terminal of the eighth capacitor C8. The other end of the fifth resistor R5 is connected to the input terminal of the fourth operational amplifier A4, where the connection point is connected to the terminal of the fifth switch S5, the other end of the third resistor R3, and the other end of the eighth capacitor C8. The other end of the fifth switch S5 is connected to the other end of the sixth capacitor C6.

It may be understood that the fourth switch S4 and the fifth switch S5 need to be simultaneously closed or opened. When the fourth switch S4 and the fifth switch S5 are opened, the sixth LPF and the seventh LPF jointly take effect. The filtering frequency of the sixth LPF and the seventh LPF may be set to a comparatively large value, for example, 12 MHz, and some signals with frequencies greater than 12 MHz are filtered out of the first signal. When the fourth switch S4 and the fifth switch S5 are closed, an LPF including the fourth resistor R4, the fifth resistor R5, the fifth capacitor C5, the sixth capacitor C6, the seventh capacitor C7, and the eighth capacitor C8 takes effect, and a filtering frequency of the LPF may be set to a comparatively small value, for example, 5.2 MHz, and some signals with frequencies greater than 5.2 MHz are filtered out of the first signal. Therefore, the fourth switch S4 and the fifth switch S5 may be controlled, based on a frequency band currently used by an upstream signal, to be closed or opened, to implement different filtering effects. For example, when a highest frequency band currently used by an upstream signal is US2, the fourth switch S4 and the fifth switch S5 are opened, so that the LPFs that have the filtering frequency of 12 MHz take effect. When a highest frequency band currently used by an upstream signal is US1, the fourth switch S4 and the fifth switch S5 are closed, so that the LPF that has the filtering frequency of 5.2 MHz takes effect. 3. At least one LPF is disposed in each of an AFE and an LD module.

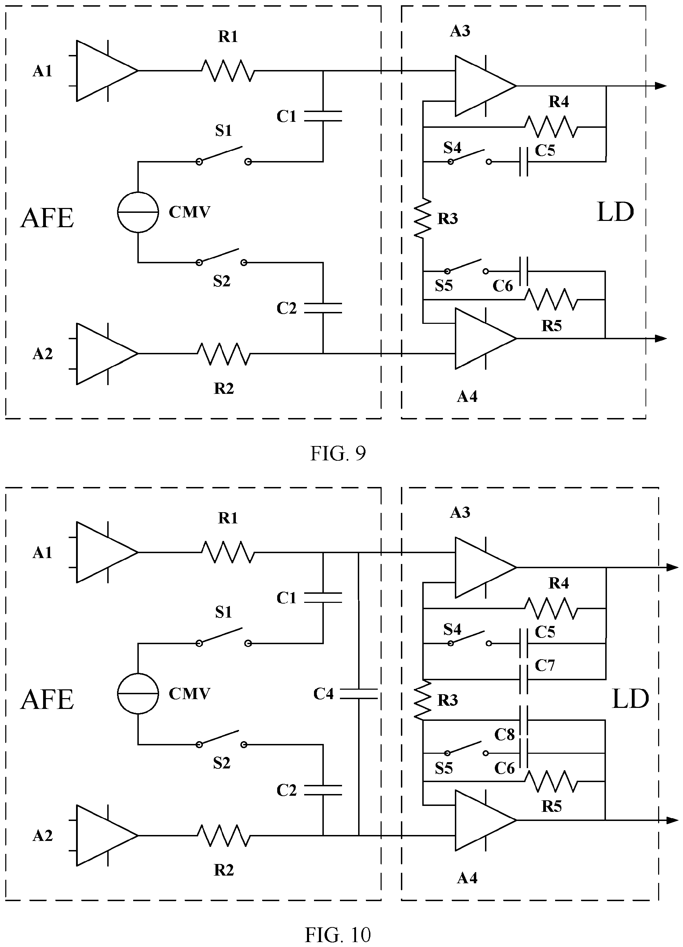

Referring to FIG. 9, a first LPF is disposed in an AFE, and a fourth LPF and a fifth LPF are disposed in an LD module.

Specifically, one terminal of a first resistor R1 is connected to an output terminal of a first operational amplifier A1, the other end of the first resistor R1 is connected to one terminal of a first capacitor C1, the other end of the first capacitor C1 is connected to one terminal of a first switch S1, and the other end of the first switch S1 is connected to a CMV.

One terminal of a second resistor R2 is connected to an output terminal of a second operational amplifier A2, the other end of the second resistor R2 is connected to one terminal of a second capacitor C2, the other end of the second capacitor C2 is connected to one terminal of a second switch S2, and the other end of the second switch S2 is connected to the CMV.

An output terminal of a third operational amplifier A3 is connected to one terminal of a fourth resistor R4, where a connection point is connected to one terminal of a fifth capacitor C5. The other end of the fourth resistor R4 is connected to one input terminal of the third operational amplifier A3, where a connection point is connected to one terminal of a fourth switch S4 and one terminal of a third resistor R3. The other end of the fourth switch S4 is connected to the other end of the fifth capacitor C5.

An output terminal of a fourth operational amplifier A4 is connected to one terminal of a fifth resistor R5, where a connection point is connected to one terminal of a sixth capacitor C6. The other end of the fifth resistor R5 is connected to one input terminal of the fourth operational amplifier A4, where a connection point is connected to one terminal of a fifth switch S5 and the other end of the third resistor R3. The other end of the fifth switch S5 is connected to the other end of the sixth capacitor C6.

It should be noted that a same filtering frequency may be set for the LPF in the AFE and the LPFs in the LD module, to enhance a filtering effect in a specific mode. For example, if a frequency band used by an upstream signal is US0, the filtering frequency is set to 138 kHz. When a first signal passes through the AFE and the LD module, filtering may be performed twice to obtain a second signal. In addition, different filtering frequencies may alternatively be set for the LPF in the AFE and the LPFs in the LD module, to implement filtering effects in different modes. For example, a filtering frequency of the LPF in the AFE is set to 138 kHz, and a filtering frequency of the LPFs in the LD module is set to 5.2 MHz. When a highest frequency band used by an upstream signal is US0, the LPF in the AFE is turned on to perform filtering. When a highest frequency band used by an upstream signal is US1, the LPF in the

AFE is turned off, and the LPFs in the LD module are turned on to perform filtering.

It may be understood that, in this embodiment, the LPF in the AFE may alternatively be disposed in the manner shown in FIG. 4, FIG. 5, or FIG. 6, and the LPFs in the LD module may alternatively be disposed in the manner shown in FIG. 8. Details are not described herein again. Referring to FIG. 10, the following describes a case in which an AFE module and an LD module each include a plurality of LPFs.

Specifically, the terminal of the first resistor R1 is connected to the output terminal of the first operational amplifier A1. The other end of the first resistor R1 is connected to the terminal of the first capacitor C1, where a connection point is connected to one terminal of a fourth capacitor C4. The other end of the first capacitor C1 is connected to the terminal of the first switch S1. The other end of the first switch S1 is connected to the CMV.

The terminal of the second resistor R2 is connected to the output terminal of the second operational amplifier A2. The other end of the second resistor R2 is connected to the terminal of the second capacitor C2, where a connection point is connected to the other end of the fourth capacitor C4. The other end of the second capacitor C2 is connected to the terminal of the second switch S2. The other end of the second switch S2 is connected to the CMV.

The output terminal of the third operational amplifier A3 is connected to the terminal of the fourth resistor R4, where the connection point is connected to the terminal of the fifth capacitor C5 and one terminal of a seventh capacitor C7. The other end of the fourth resistor R4 is connected to the input terminal of the third operational amplifier A3, where the connection point is connected to the terminal of the fourth switch S4, the terminal of the third resistor R3, and the other end of the seventh capacitor C7. The other end of the fourth switch S4 is connected to the other end of the fifth capacitor C5.

The output terminal of the fourth operational amplifier A4 is connected to the terminal of the fifth resistor R5, where the connection point is connected to the terminal of the sixth capacitor C6 and one terminal of an eighth capacitor C8. The other end of the fifth resistor R5 is connected to the input terminal of the fourth operational amplifier A4, where the connection point is connected to the terminal of the fifth switch S5, the other end of the third resistor R3, and the other end of the eighth capacitor C8. The other end of the fifth switch S5 is connected to the other end of the sixth capacitor C6.

In this embodiment, the first switch S1, the second switch S2, the fourth switch S4, and the fifth switch S5 may be controlled to be opened or closed, to implement a plurality of filtering effects in different modes. For example, a filtering frequency of an LPF including the first resistor R1, the second resistor R2, and the fourth capacitor C4 is set to 12 MHz; a filtering frequency of an LPF including the fourth resistor R4, the seventh capacitor C7, the fifth resistor R5, and the eighth capacitor C8 is set to 12 MHz; when the fourth switch S4 and the fifth switch S5 are closed, a filtering frequency of an LPF including the fourth resistor R4, the fifth resistor R5, the fifth capacitor C5, the sixth capacitor C6, the seventh capacitor C7, and the eighth capacitor C8 is set to 5.2 MHz; when the first switch S1 and the second switch S2 are closed, a filtering frequency of an LPF including the first resistor R1, the second resistor R2, the first capacitor C1, the second capacitor C2, and the fourth capacitor C4 is set to 138 kHz.

When a highest frequency band used by an upstream signal is US2, the first switch S1, the second switch S2, the fourth switch S4, and the fifth switch S5 are opened. In this case, the LPFs that have the filtering frequency of 12 MHz take effect. When a highest frequency band used by an upstream signal is US1, the first switch S1 and the second switch S2 are opened, and the fourth switch S4 and the fifth switch S5 are closed. In this case, the LPF that has the filtering frequency of 5.2 MHz takes effect. When a highest frequency band used by an upstream signal is US0, the first switch S1 and the second switch S2 are closed. In this case, the LPF that has the filtering frequency of 138 kHz takes effect.

The foregoing describes the embodiments of this application from a perspective of the sending apparatus. The following describes a signal transmission method applied to the sending apparatus.

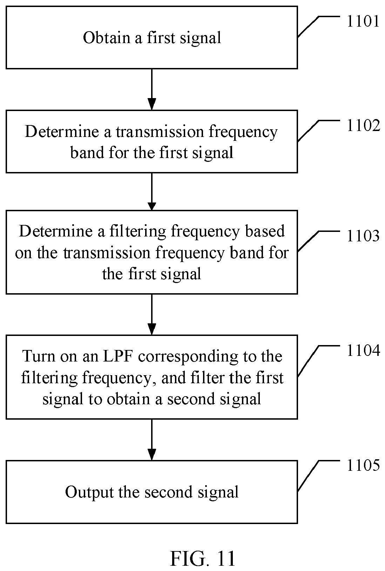

Referring to FIG. 11, an embodiment of the signal transmission method in the embodiments of this application includes the following steps.

1101: Obtain a first signal.

In this embodiment of this application, the obtained first signal is an upstream signal that needs to be sent by customer-premises equipment to a central office device.

1102: Determine a transmission frequency band for the first signal.

In this embodiment of this application, the transmission frequency band for the first signal may be determined based on one or more parameters such as a working mode, a loop distance, a signal-to-noise ratio, or line attenuation. For example, in an ADSL working mode, transmission frequency bands for the first signal are US0 and US1; and in a VDSL or V35 working mode, transmission frequency bands for the first signal are US0, US1, and US2. For another example, with different loop distances, transmission frequency bands for the first signal are also different. Only US0 may be available during long-distance transmission, but US0, US1, and US2 are all available during short-distance transmission.

1103: Determine a filtering frequency based on the transmission frequency band for the first signal.

In this embodiment of this application, after the transmission frequency band for the first signal is determined, the filtering frequency may be determined based on the transmission frequency band for the first signal. It may be understood that the filtering frequency should be greater than or equal to a highest frequency of the transmission frequency band. For example, transmission frequency bands are US0, US1, and US2. In this case, respective filtering frequencies should be set to 138 kHz, 5.2 MHz, and 12 MHz.

1104: Turn on an LPF corresponding to the filtering frequency, and filter the first signal to obtain a second signal.

In this embodiment of this application, after the filtering frequency is determined, the LPF corresponding to the filtering frequency is turned on to filter the first signal to obtain the second signal. It may be understood that, in different scenarios, filters for which different filtering frequencies are set may be selected, based on an actual situation, to be turned on. A specific implementation is similar to the descriptions in the embodiments shown in FIG. 3 to FIG. 10, and details are not described herein again.

1105: Output the second signal.

In this embodiment of this application, after the first signal is filtered to obtain the second signal, the second signal is further output to a twisted pair.

The sending apparatus and signal transmission method provided in this application are described in detail above.

## Claims

1. A sending apparatus, comprising an analog front end, AFE, and a line driver, LD, module, wherein an output terminal of the AFE is connected to an input terminal of the LD module, the AFE comprises at least one low-pass filter, LPF, and a filtering frequency is set for each LPF;
the AFE is configured to obtain a first signal, and filter out, by using the LPF, a signal with a frequency greater than the filtering frequency from the first signal, to obtain a second signal; and
the LD module is configured to receive the second signal;
wherein the AFE comprises a first LPF, a stable voltage source, a first operational amplifier, and a second operational amplifier;
the first LPF comprises a first resistor, a second resistor, a first capacitor, a second capacitor, a first switch, and a second switch, the first switch and the second switch are closed to turn on the first LPF, the first switch and the second switch are opened to turn off the first LPF, and a first filtering frequency is set for the first LPF;
one terminal of the first resistor is connected to an output terminal of the first operational amplifier, the other end of the first resistor is connected to one end of the first capacitor, the other end of the first capacitor is connected to one end of the first switch, and the other end of the first switch is connected to the stable voltage source; and
one end of the second resistor is connected to an output terminal of the second operational amplifier, the other end of the second resistor is connected to one end of the second capacitor, the other end of the second capacitor is connected to one end of the second switch, and the other end of the second switch is connected to the stable voltage source.

2. The sending apparatus according to claim 1, wherein the AFE comprises a second LPF, a first operational amplifier, and a second operational amplifier;
the second LPF comprises a first resistor, a second resistor, a third capacitor, and a third switch, the third switch is closed to turn on the second LPF, the third switch is opened to turn off the second LPF, and a second filtering frequency is set for the second LPF; and
one end of the first resistor is connected to an output terminal of the first operational amplifier, the other end of the first resistor is connected to one end of the third capacitor, the other end of the third capacitor is connected to one end of the third switch, the other end of the third switch is connected to one end of the second resistor, and the other end of the second resistor is connected to an output terminal of the second operational amplifier.

3. The sending apparatus according to claim 1, wherein the AFE further comprises a third LPF;
the third LPF comprises the first resistor, the second resistor, and a fourth capacitor, and a third filtering frequency is set for the third LPF;
the terminal of the first resistor is connected to the output terminal of the first operational amplifier, the other end of the first resistor is connected to the terminal of the first capacitor, wherein a connection point is connected to one end of the fourth capacitor, the other end of the first capacitor is connected to the terminal of the first switch, and the other end of the first switch is connected to the stable voltage source; and
the terminal of the second resistor is connected to the output terminal of the second operational amplifier, the other end of the second resistor is connected to the terminal of the second capacitor, wherein a connection point is connected to the other end of the fourth capacitor, the other end of the second capacitor is connected to the terminal of the second switch, and the other end of the second switch is connected to the stable voltage source.

4. The sending apparatus according to claim 2, wherein the AFE further comprises a third LPF;
the third LPF comprises the first resistor, the second resistor, and a fourth capacitor, and a third filtering frequency is set for the third LPF; and
the terminal of the first resistor is connected to the output terminal of the first operational amplifier, the other end of the first resistor is connected to the terminal of the third capacitor, wherein a connection point is connected to one end of the fourth capacitor, the other end of the third capacitor is connected to the terminal of the third switch, the other end of the third switch is connected to the terminal of the second resistor, wherein a connection point is connected to the other end of the fourth capacitor, and the other end of the second resistor is connected to the output terminal of the second operational amplifier.

5. The sending apparatus according to any one of claims 1 to 4, wherein the LD module comprises a third operational amplifier, a fourth operational amplifier, a third resistor, a fourth LPF, and a fifth LPF;
the fourth LPF comprises a fourth resistor, a fifth capacitor, and a fourth switch, the fourth switch is closed to turn on the fourth LPF, the fourth switch is opened to turn off the fourth LPF, and a fourth filtering frequency is set for the fourth LPF;
the fifth LPF comprises a fifth resistor, a sixth capacitor, and a fifth switch, the fifth switch is closed to turn on the fifth LPF, the fifth switch is opened to turn off the fifth LPF, and a fifth filtering frequency is set for the fifth LPF;
an output terminal of the third operational amplifier is connected to one end of the fourth resistor, wherein a connection point is connected to one end of the fifth capacitor, the other end of the fourth resistor is connected to one input terminal of the third operational amplifier, wherein a connection point is connected to one end of the fourth switch and one end of the third resistor, and the other end of the fourth switch is connected to the other end of the fifth capacitor; and
an output terminal of the fourth operational amplifier is connected to one end of the fifth resistor, wherein a connection point is connected to one end of the sixth capacitor, the other end of the fifth resistor is connected to one input terminal of the fourth operational amplifier, wherein a connection point is connected to one end of the fifth switch and the other end of the third resistor, and the other end of the fifth switch is connected to the other end of the sixth capacitor.

6. The sending apparatus according to claim 5, wherein the LD module further comprises a sixth LPF and a seventh LPF;
the sixth LPF comprises the fourth resistor and a seventh capacitor, and a sixth filtering frequency is set for the sixth LPF;
the seventh LPF comprises the fifth resistor and an eighth capacitor, and a seventh filtering frequency is set for the seventh LPF;
the output terminal of the third operational amplifier is connected to the terminal of the fourth resistor, wherein the connection point is connected to the terminal of the fifth capacitor and one end of the seventh capacitor, the other end of the fourth resistor is connected to the input terminal of the third operational amplifier, wherein the connection point is connected to the terminal of the fourth switch, the terminal of the third resistor, and the other end of the seventh capacitor, and the other end of the fourth switch is connected to the other end of the fifth capacitor; and
the output terminal of the fourth operational amplifier is connected to the terminal of the fifth resistor, wherein the connection point is connected to the terminal of the sixth capacitor and one end of the eighth capacitor, the other end of the fifth resistor is connected to the input terminal of the fourth operational amplifier, wherein the connection point is connected to the terminal of the fifth switch, the other end of the third resistor, and the other end of the eighth capacitor, and the other end of the fifth switch is connected to the other end of the sixth capacitor.

7. A sending apparatus, comprising an analog front end, AFE, and a line driver, LD, module, wherein an output terminal of the AFE is connected to an input terminal of the LD module, the LD module comprises at least one low-pass filter, LPF, and a filtering frequency is set for each LPF;
the AFE is configured to obtain a first signal, and send the first signal to the LD module; and
the LD module is configured to receive the first signal, and filter out, by using the LPF, a signal with a frequency greater than the filtering frequency from the first signal, to obtain a second signal;
wherein the AFE comprises a first LPF, a stable voltage source, a first operational amplifier, and a second operational amplifier;
the first LPF comprises a first resistor, a second resistor, a first capacitor, a second capacitor, a first switch, and a second switch, the first switch and the second switch are closed to turn on the first LPF, the first switch and the second switch are opened to turn off the first LPF, and a first filtering frequency is set for the first LPF;
one terminal of the first resistor is connected to an output terminal of the first operational amplifier, the other end of the first resistor is connected to one end of the first capacitor, the other end of the first capacitor is connected to one end of the first switch, and the other end of the first switch is connected to the stable voltage source; and
one end of the second resistor is connected to an output terminal of the second operational amplifier, the other end of the second resistor is connected to one end of the second capacitor, the other end of the second capacitor is connected to one end of the second switch, and the other end of the second switch is connected to the stable voltage source.

8. The sending apparatus according to claim 7, wherein the LD module comprises a third operational amplifier, a fourth operational amplifier, a third resistor, a fourth LPF, and a fifth LPF;
the fourth LPF comprises a fourth resistor, a fifth capacitor, and a fourth switch, the fourth switch is closed to turn on the fourth LPF, the fourth switch is opened to turn off the fourth LPF, and a fourth filtering frequency is set for the fourth LPF;
the fifth LPF comprises a fifth resistor, a sixth capacitor, and a fifth switch, the fifth switch is closed to turn on the fifth LPF, the fifth switch is opened to turn off the fifth LPF, and a fifth filtering frequency is set for the fifth LPF;
an output terminal of the third operational amplifier is connected to one end of the fourth resistor, wherein a connection point is connected to one end of the fifth capacitor, the other end of the fourth resistor is connected to one input terminal of the third operational amplifier, wherein a connection point is connected to one end of the fourth switch and one end of the third resistor, and the other end of the fourth switch is connected to the other end of the fifth capacitor; and
an output terminal of the fourth operational amplifier is connected to one end of the fifth resistor, wherein a connection point is connected to one end of the sixth capacitor, the other end of the fifth resistor is connected to one input terminal of the fourth operational amplifier, wherein a connection point is connected to one end of the fifth switch and the other end of the third resistor, and the other end of the fifth switch is connected to the other end of the sixth capacitor.

9. The sending apparatus according to claim 8, wherein the LD module further comprises a sixth LPF and a seventh LPF;
the sixth LPF comprises the fourth resistor and a seventh capacitor, and a sixth filtering frequency is set for the sixth LPF;
the seventh LPF comprises the fifth resistor and an eighth capacitor, and a seventh filtering frequency is set for the seventh LPF;
the output terminal of the third operational amplifier is connected to the terminal of the fourth resistor, wherein the connection point is connected to the terminal of the fifth capacitor and one end of the seventh capacitor, the other end of the fourth resistor is connected to the input terminal of the third operational amplifier, wherein the connection point is connected to the terminal of the fourth switch, the terminal of the third resistor, and the other end of the seventh capacitor, and the other end of the fourth switch is connected to the other end of the fifth capacitor; and
the output terminal of the fourth operational amplifier is connected to the terminal of the fifth resistor, wherein the connection point is connected to the terminal of the sixth capacitor and one end of the eighth capacitor, the other end of the fifth resistor is connected to the input terminal of the fourth operational amplifier, wherein the connection point is connected to the terminal of the fifth switch, the other end of the third resistor, and the other end of the eighth capacitor, and the other end of the fifth switch is connected to the other end of the sixth capacitor.

10. The sending apparatus according to any one of claims 7 to 9, wherein the AFE comprises a first LPF, a stable voltage source, a first operational amplifier, and a second operational amplifier;
the first LPF comprises a first resistor, a second resistor, a first capacitor, a second capacitor, a first switch, and a second switch, the first switch and the second switch are closed to turn on the first LPF, the first switch and the second switch are opened to turn off the first LPF, and a first filtering frequency is set for the first LPF;
one end of the first resistor is connected to an output terminal of the first operational amplifier, the other end of the first resistor is connected to one end of the first capacitor, the other end of the first capacitor is connected to one end of the first switch, and the other end of the first switch is connected to the stable voltage source; and
one end of the second resistor is connected to an output terminal of the second operational amplifier, the other end of the second resistor is connected to one end of the second capacitor, the other end of the second capacitor is connected to one end of the second switch, and the other end of the second switch is connected to the stable voltage source.

11. The sending apparatus according to any one of claims 7 to 9, wherein the AFE comprises a second LPF, a first operational amplifier, and a second operational amplifier;
the second LPF comprises a first resistor, a second resistor, a third capacitor, and a third switch, the third switch is closed to turn on the second LPF, the third switch is opened to turn off the second LPF, and a second filtering frequency is set for the second LPF; and
one end of the first resistor is connected to an output terminal of the first operational amplifier, the other end of the first resistor is connected to one end of the third capacitor, the other end of the third capacitor is connected to one end of the third switch, the other end of the third switch is connected to one end of the second resistor, and the other end of the second resistor is connected to an output terminal of the second operational amplifier.

12. The sending apparatus according to claim 10, wherein the AFE further comprises a third LPF;
the third LPF comprises the first resistor, the second resistor, and a fourth capacitor, and a third filtering frequency is set for the third LPF;
the terminal of the first resistor is connected to the output terminal of the first operational amplifier, the other end of the first resistor is connected to the terminal of the first capacitor, wherein a connection point is connected to one end of the fourth capacitor, the other end of the first capacitor is connected to the terminal of the first switch, and the other end of the first switch is connected to the stable voltage source; and
the terminal of the second resistor is connected to the output terminal of the second operational amplifier, the other end of the second resistor is connected to the terminal of the second capacitor, wherein a connection point is connected to the other end of the fourth capacitor, the other end of the second capacitor is connected to the terminal of the second switch, and the other end of the second switch is connected to the stable voltage source.

13. A signal transmission method, comprising:
obtaining (1101) a first signal;
filtering out, by using a low-pass filter, LPF, a signal with a frequency greater than the filtering frequency from the first signal, to obtain a second signal, wherein the filtering frequency is set for the LPF; and
outputting the second signal;
wherein the method comprises utilizing a stable voltage source, a first operational amplifier, and a second operational amplifier;
wherein, the LPF comprises a first resistor, a second resistor, a first capacitor, a second capacitor, a first switch, and a second switch, the first switch and the second switch are closed to turn on the LPF, the first switch and the second switch are opened to turn off the LPF, and a first filtering frequency is set for the first LPF;
one terminal of the first resistor is connected to an output terminal of the first operational amplifier, the other end of the first resistor is connected to one end of the first capacitor, the other end of the first capacitor is connected to one end of the first switch, and the other end of the first switch is connected to the stable voltage source; and
one end of the second resistor is connected to an output terminal of the second operational amplifier, the other end of the second resistor is connected to one end of the second capacitor, the other end of the second capacitor is connected to one end of the second switch, and the other end of the second switch is connected to the stable voltage source.

14. The method according to claim 13, wherein the filtering out, by using an LPF, a signal with a frequency greater than the filtering frequency from the first signal, to obtain a second signal comprises:
determining the filtering frequency based on a transmission frequency band for the first signal, wherein the filtering frequency is greater than or equal to a highest frequency of the transmission frequency band; and
turning on the LPF corresponding to the filtering frequency, and filtering the first signal to obtain the second signal.

## Patentansprüche

1. Sendevorrichtung, die ein analoges Frontend (AFE) und ein Leitungstreibermodul (LD) umfasst, wobei ein Ausgangsanschluss des AFE mit einem Eingangsanschluss des LD-Moduls verbunden ist, das AFE mindestens einen Tiefpassfilter (LPF) umfasst und eine Filterfrequenz für jeden LPF eingestellt ist;
das AFE dazu konfiguriert ist, ein erstes Signal zu erhalten und unter Verwendung des LPF ein Signal mit einer Frequenz größer als die Filterfrequenz aus dem ersten Signal herauszufiltern, um ein zweites Signal zu erhalten; und
das LD-Modul dazu konfiguriert ist, das zweite Signal zu empfangen;
wobei das AFE einen ersten LPF, eine stabile Spannungsquelle, einen ersten Operationsverstärker und einen zweiten Operationsverstärker umfasst;
der erste LPF einen ersten Widerstand, einen zweiten Widerstand, einen ersten Kondensator, einen zweiten Kondensator, einen ersten Schalter und einen zweiten Schalter umfasst, der erste Schalter und der zweite Schalter geschlossen sind, um den ersten LPF einzuschalten, der erste Schalter und der zweite Schalter geöffnet sind, um den ersten LPF auszuschalten, und eine erste Filterfrequenz für den ersten LPF eingestellt ist;
ein Anschluss des ersten Widerstands mit einem Ausgangsanschluss des ersten Operationsverstärkers verbunden ist, das andere Ende des ersten Widerstands mit einem Ende des ersten Kondensators verbunden ist, das andere Ende des ersten Kondensators mit einem Ende des ersten Schalters verbunden ist und das andere Ende des ersten Schalters mit der stabilen Spannungsquelle verbunden ist; und
ein Ende des zweiten Widerstands mit einem Ausgangsanschluss des zweiten Operationsverstärkers verbunden ist, das andere Ende des zweiten Widerstands mit einem Ende des zweiten Kondensators verbunden ist, das andere Ende des zweiten Kondensators mit einem Ende des zweiten Schalters verbunden ist, und das andere Ende des zweiten Schalters mit der stabilen Spannungsquelle verbunden ist.

2. Sendevorrichtung nach Anspruch 1, wobei das AFE einen zweiten LPF, einen ersten Operationsverstärker und einen zweiten Operationsverstärker umfasst;
der zweite LPF einen ersten Widerstand, einen zweiten Widerstand, einen dritten Kondensator und einen dritten Schalter umfasst, der dritte Schalter geschlossen ist, um den zweiten LPF einzuschalten, der dritte Schalter geöffnet ist, um den zweiten LPF auszuschalten, und eine zweite Filterfrequenz für den zweiten LPF eingestellt wird; und
ein Ende des ersten Widerstands mit einem Ausgangsanschluss des ersten Operationsverstärkers verbunden ist, das andere Ende des ersten Widerstands mit einem Ende des dritten Kondensators verbunden ist, das andere Ende des dritten Kondensators mit einem Ende des dritten Schalters verbunden ist, das andere Ende des dritten Schalters mit einem Ende des zweiten Widerstands verbunden ist, und das andere Ende des zweiten Widerstands mit einem Ausgangsanschluss des zweiten Operationsverstärkers verbunden ist.

3. Sendevorrichtung nach Anspruch 1, wobei das AFE ferner einen dritten LPF umfasst;
der dritte LPF umfasst den ersten Widerstand, den zweiten Widerstand und einen vierten Kondensator, und eine dritte Filterfrequenz wird für den dritten LPF eingestellt;
der Anschluss des ersten Widerstands mit dem Ausgangsanschluss des ersten Operationsverstärkers verbunden ist, das andere Ende des ersten Widerstands mit dem Anschluss des ersten Kondensators verbunden ist, wobei ein Verbindungspunkt mit einem Ende des vierten Kondensators verbunden ist, das andere Ende des ersten Kondensators mit dem Anschluss des ersten Schalters verbunden ist und das andere Ende des ersten Schalters mit der stabilen Spannungsquelle verbunden ist; und
der Anschluss des zweiten Widerstands mit dem Ausgangsanschluss des zweiten Operationsverstärkers verbunden ist, das andere Ende des zweiten Widerstands mit dem Anschluss des zweiten Kondensators verbunden ist, wobei ein Verbindungspunkt mit dem anderen Ende des vierten Kondensators verbunden ist, das andere Ende des zweiten Kondensators mit dem Anschluss des zweiten Schalters verbunden ist und das andere Ende des zweiten Schalters mit der stabilen Spannungsquelle verbunden ist.

4. Sendevorrichtung nach Anspruch 2, wobei das AFE ferner einen dritten LPF umfasst;
der dritte LPF den ersten Widerstand, den zweiten Widerstand und einen vierten Kondensator umfasst, und eine dritte Filterfrequenz für den dritten LPF eingestellt ist; und
der Anschluss des ersten Widerstands mit dem Ausgangsanschluss des ersten Operationsverstärkers verbunden ist, das andere Ende des ersten Widerstands mit dem Anschluss des dritten Kondensators verbunden ist, wobei ein Verbindungspunkt mit einem Ende des vierten Kondensators verbunden ist, das andere Ende des dritten Kondensators mit dem Anschluss des dritten Schalters verbunden ist, das andere Ende des dritten Schalters mit dem Anschluss des zweiten Widerstands verbunden ist, wobei ein Verbindungspunkt mit dem anderen Ende des vierten Kondensators verbunden ist, und das andere Ende des zweiten Widerstands mit dem Ausgangsanschluss des zweiten Operationsverstärkers verbunden ist.

5. Sendevorrichtung nach einem der Ansprüche 1 bis 4, wobei das LD-Modul einen dritten Operationsverstärker, einen vierten Operationsverstärker, einen dritten Widerstand, einen vierten LPF und einen fünften LPF umfasst;
der vierte LPF einen vierten Widerstand, einen fünften Kondensator und einen vierten Schalter umfasst, der vierte Schalter geschlossen ist, um den vierten LPF einzuschalten, der vierte Schalter geöffnet ist, um den vierten LPF auszuschalten, und eine vierte Filterfrequenz für den vierten LPF eingestellt ist;
der fünfte LPF einen fünften Widerstand, einen sechsten Kondensator und einen fünften Schalter umfasst, der fünfte Schalter geschlossen ist, um den fünften LPF einzuschalten, der fünfte Schalter geöffnet ist, um den fünften LPF auszuschalten, und eine fünfte Filterfrequenz für den fünften LPF eingestellt ist;
ein Ausgangsanschluss des dritten Operationsverstärkers mit einem Ende des vierten Widerstands verbunden ist, wobei ein Verbindungspunkt mit einem Ende des fünften Kondensators verbunden ist, das andere Ende des vierten Widerstands mit einem Eingangsanschluss des dritten Operationsverstärkers verbunden ist, wobei ein Verbindungspunkt mit einem Ende des vierten Schalters und einem Ende des dritten Widerstands verbunden ist und das andere Ende des vierten Schalters mit dem anderen Ende des fünften Kondensators verbunden ist; und
ein Ausgangsanschluss des vierten Operationsverstärkers mit einem Ende des fünften Widerstands verbunden ist, wobei ein Verbindungspunkt mit einem Ende des sechsten Kondensators verbunden ist, das andere Ende des fünften Widerstands mit einem Eingangsanschluss des vierten Operationsverstärkers verbunden ist, wobei ein Verbindungspunkt mit einem Ende des fünften Schalters und dem anderen Ende des dritten Widerstands verbunden ist, und das andere Ende des fünften Schalters mit dem anderen Ende des sechsten Kondensators verbunden ist.

6. Sendevorrichtung nach Anspruch 5, wobei das LD-Modul ferner einen sechsten LPF und einen siebten LPF umfasst;
der sechste LPF umfasst den vierten Widerstand und einen siebten Kondensator, und eine sechste Filterfrequenz wird für den sechsten LPF eingestellt;
der siebte LPF umfasst den fünften Widerstand und einen achten Kondensator, und eine siebte Filterfrequenz wird für den siebten LPF eingestellt;
der Ausgangsanschluss des dritten Operationsverstärkers mit dem Anschluss des vierten Widerstands verbunden ist, wobei der Verbindungspunkt mit dem Anschluss des fünften Kondensators und einem Ende des siebten Kondensators verbunden ist, das andere Ende des vierten Widerstands mit dem Eingangsanschluss des dritten Operationsverstärkers verbunden ist, wobei der Verbindungspunkt mit dem Anschluss des vierten Schalters, dem Anschluss des dritten Widerstands und dem anderen Ende des siebten Kondensators verbunden ist, und das andere Ende des vierten Schalters mit dem anderen Ende des fünften Kondensators verbunden ist; und
der Ausgangsanschluss des vierten Operationsverstärkers mit dem Anschluss des fünften Widerstands verbunden ist, wobei der Verbindungspunkt mit dem Anschluss des sechsten Kondensators und einem Ende des achten Kondensators verbunden ist, das andere Ende des fünften Widerstands mit dem Eingangsanschluss des vierten Operationsverstärkers verbunden ist, wobei der Verbindungspunkt mit dem Anschluss des fünften Schalters, dem anderen Ende des dritten Widerstands und dem anderen Ende des achten Kondensators verbunden ist, und das andere Ende des fünften Schalters mit dem anderen Ende des sechsten Kondensators verbunden ist.

7. Sendevorrichtung, die ein analoges Frontend (AFE) und ein Leitungstreibermodul (LD) umfasst, wobei ein Ausgangsanschluss des AFE mit einem Eingangsanschluss des LD-Moduls verbunden ist, das LD-Modul mindestens einen Tiefpassfilter (LPF) umfasst und eine Filterfrequenz für jeden LPF eingestellt ist;
das AFE dazu konfiguriert ist, ein erstes Signal zu erhalten und das erste Signal an das LD-Modul zu senden; und
das LD-Modul ist so konfiguriert, dass es das erste Signal empfängt und unter Verwendung des LPF ein Signal mit einer Frequenz größer als die Filterfrequenz aus dem ersten Signal herausfiltert, um ein zweites Signal zu erhalten;
wobei das AFE einen ersten LPF, eine stabile Spannungsquelle, einen ersten Operationsverstärker und einen zweiten Operationsverstärker umfasst;
der erste LPF einen ersten Widerstand, einen zweiten Widerstand, einen ersten Kondensator, einen zweiten Kondensator, einen ersten Schalter und einen zweiten Schalter umfasst, der erste Schalter und der zweite Schalter geschlossen sind, um den ersten LPF einzuschalten, der erste Schalter und der zweite Schalter geöffnet sind, um den ersten LPF auszuschalten, und eine erste Filterfrequenz für den ersten LPF eingestellt ist;
ein Anschluss des ersten Widerstands mit einem Ausgangsanschluss des ersten Operationsverstärkers verbunden ist, das andere Ende des ersten Widerstands mit einem Ende des ersten Kondensators verbunden ist, das andere Ende des ersten Kondensators mit einem Ende des ersten Schalters verbunden ist und das andere Ende des ersten Schalters mit der stabilen Spannungsquelle verbunden ist; und
ein Ende des zweiten Widerstands mit einem Ausgangsanschluss des zweiten Operationsverstärkers verbunden ist, das andere Ende des zweiten Widerstands mit einem Ende des zweiten Kondensators verbunden ist, das andere Ende des zweiten Kondensators mit einem Ende des zweiten Schalters verbunden ist, und das andere Ende des zweiten Schalters mit der stabilen Spannungsquelle verbunden ist.

8. Sendevorrichtung nach Anspruch 7, wobei das LD-Modul einen dritten Operationsverstärker, einen vierten Operationsverstärker, einen dritten Widerstand, einen vierten LPF und einen fünften LPF umfasst;
der vierte LPF einen vierten Widerstand, einen fünften Kondensator und einen vierten Schalter umfasst, der vierte Schalter geschlossen ist, um den vierten LPF einzuschalten, der vierte Schalter geöffnet ist, um den vierten LPF auszuschalten, und eine vierte Filterfrequenz für den vierten LPF eingestellt ist;
der fünfte LPF einen fünften Widerstand, einen sechsten Kondensator und einen fünften Schalter umfasst, der fünfte Schalter geschlossen ist, um den fünften LPF einzuschalten, der fünfte Schalter geöffnet ist, um den fünften LPF auszuschalten, und eine fünfte Filterfrequenz für den fünften LPF eingestellt ist;
ein Ausgangsanschluss des dritten Operationsverstärkers mit einem Ende des vierten Widerstands verbunden ist, wobei ein Verbindungspunkt mit einem Ende des fünften Kondensators verbunden ist, das andere Ende des vierten Widerstands mit einem Eingangsanschluss des dritten Operationsverstärkers verbunden ist, wobei ein Verbindungspunkt mit einem Ende des vierten Schalters und einem Ende des dritten Widerstands verbunden ist und das andere Ende des vierten Schalters mit dem anderen Ende des fünften Kondensators verbunden ist; und
ein Ausgangsanschluss des vierten Operationsverstärkers mit einem Ende des fünften Widerstands verbunden ist, wobei ein Verbindungspunkt mit einem Ende des sechsten Kondensators verbunden ist, das andere Ende des fünften Widerstands mit einem Eingangsanschluss des vierten Operationsverstärkers verbunden ist, wobei ein Verbindungspunkt mit einem Ende des fünften Schalters und dem anderen Ende des dritten Widerstands verbunden ist, und das andere Ende des fünften Schalters mit dem anderen Ende des sechsten Kondensators verbunden ist.

9. Sendevorrichtung nach Anspruch 8, wobei das LD-Modul ferner einen sechsten LPF und einen siebten LPF umfasst;
der sechste LPF umfasst den vierten Widerstand und einen siebten Kondensator, und eine sechste Filterfrequenz wird für den sechsten LPF eingestellt;
der siebte LPF umfasst den fünften Widerstand und einen achten Kondensator, und eine siebte Filterfrequenz wird für den siebten LPF eingestellt;
der Ausgangsanschluss des dritten Operationsverstärkers mit dem Anschluss des vierten Widerstands verbunden ist, wobei der Verbindungspunkt mit dem Anschluss des fünften Kondensators und einem Ende des siebten Kondensators verbunden ist, das andere Ende des vierten Widerstands mit dem Eingangsanschluss des dritten Operationsverstärkers verbunden ist, wobei der Verbindungspunkt mit dem Anschluss des vierten Schalters, dem Anschluss des dritten Widerstands und dem anderen Ende des siebten Kondensators verbunden ist, und das andere Ende des vierten Schalters mit dem anderen Ende des fünften Kondensators verbunden ist; und
der Ausgangsanschluss des vierten Operationsverstärkers mit dem Anschluss des fünften Widerstands verbunden ist, wobei der Verbindungspunkt mit dem Anschluss des sechsten Kondensators und einem Ende des achten Kondensators verbunden ist, das andere Ende des fünften Widerstands mit dem Eingangsanschluss des vierten Operationsverstärkers verbunden ist, wobei der Verbindungspunkt mit dem Anschluss des fünften Schalters, dem anderen Ende des dritten Widerstands und dem anderen Ende des achten Kondensators verbunden ist, und das andere Ende des fünften Schalters mit dem anderen Ende des sechsten Kondensators verbunden ist.

10. Sendevorrichtung nach einem der Ansprüche 7 bis 9, wobei das AFE einen ersten LPF, eine stabile Spannungsquelle, einen ersten Operationsverstärker und einen zweiten Operationsverstärker umfasst;
der erste LPF einen ersten Widerstand, einen zweiten Widerstand, einen ersten Kondensator, einen zweiten Kondensator, einen ersten Schalter und einen zweiten Schalter umfasst, der erste Schalter und der zweite Schalter geschlossen sind, um den ersten LPF einzuschalten, der erste Schalter und der zweite Schalter geöffnet sind, um den ersten LPF auszuschalten, und eine erste Filterfrequenz für den ersten LPF eingestellt ist;
ein Ende des ersten Widerstands mit einem Ausgangsanschluss des ersten Operationsverstärkers verbunden ist, das andere Ende des ersten Widerstands mit einem Ende des ersten Kondensators verbunden ist, das andere Ende des ersten Kondensators mit einem Ende des ersten Schalters verbunden ist, und das andere Ende des ersten Schalters mit der stabilen Spannungsquelle verbunden ist; und
ein Ende des zweiten Widerstands mit einem Ausgangsanschluss des zweiten Operationsverstärkers verbunden ist, das andere Ende des zweiten Widerstands mit einem Ende des zweiten Kondensators verbunden ist, das andere Ende des zweiten Kondensators mit einem Ende des zweiten Schalters verbunden ist, und das andere Ende des zweiten Schalters mit der stabilen Spannungsquelle verbunden ist.

11. Sendevorrichtung nach einem der Ansprüche 7 bis 9, wobei das AFE einen zweiten LPF, einen ersten Operationsverstärker und einen zweiten Operationsverstärker umfasst;
der zweite LPF einen ersten Widerstand, einen zweiten Widerstand, einen dritten Kondensator und einen dritten Schalter umfasst, der dritte Schalter geschlossen ist, um den zweiten LPF einzuschalten, der dritte Schalter geöffnet ist, um den zweiten LPF auszuschalten, und eine zweite Filterfrequenz für den zweiten LPF eingestellt wird; und
ein Ende des ersten Widerstands mit einem Ausgangsanschluss des ersten Operationsverstärkers verbunden ist, das andere Ende des ersten Widerstands mit einem Ende des dritten Kondensators verbunden ist, das andere Ende des dritten Kondensators mit einem Ende des dritten Schalters verbunden ist, das andere Ende des dritten Schalters mit einem Ende des zweiten Widerstands verbunden ist, und das andere Ende des zweiten Widerstands mit einem Ausgangsanschluss des zweiten Operationsverstärkers verbunden ist.

12. Sendevorrichtung nach Anspruch 10, wobei das AFE ferner einen dritten LPF umfasst;
der dritte LPF umfasst den ersten Widerstand, den zweiten Widerstand und einen vierten Kondensator, und eine dritte Filterfrequenz wird für den dritten LPF eingestellt;
der Anschluss des ersten Widerstands mit dem Ausgangsanschluss des ersten Operationsverstärkers verbunden ist, das andere Ende des ersten Widerstands mit dem Anschluss des ersten Kondensators verbunden ist, wobei ein Verbindungspunkt mit einem Ende des vierten Kondensators verbunden ist, das andere Ende des ersten Kondensators mit dem Anschluss des ersten Schalters verbunden ist und das andere Ende des ersten Schalters mit der stabilen Spannungsquelle verbunden ist; und
der Anschluss des zweiten Widerstands mit dem Ausgangsanschluss des zweiten Operationsverstärkers verbunden ist, das andere Ende des zweiten Widerstands mit dem Anschluss des zweiten Kondensators verbunden ist, wobei ein Verbindungspunkt mit dem anderen Ende des vierten Kondensators verbunden ist, das andere Ende des zweiten Kondensators mit dem Anschluss des zweiten Schalters verbunden ist und das andere Ende des zweiten Schalters mit der stabilen Spannungsquelle verbunden ist.

13. Signalübertragungsverfahren, umfassend:
Erhalten (1101) eines ersten Signals;
Herausfiltern, unter Verwendung eines Tiefpassfilters, LPF, eines Signals mit einer Frequenz, die größer als die Filterfrequenz ist, aus dem ersten Signal, um ein zweites Signal zu erhalten, wobei die Filterfrequenz für den LPF eingestellt ist; und
Ausgeben des zweiten Signals;
wobei das Verfahren die Verwendung einer stabilen Spannungsquelle, eines ersten Operationsverstärkers und eines zweiten Operationsverstärkers umfasst;
wobei der LPF einen ersten Widerstand, einen zweiten Widerstand, einen ersten Kondensator, einen zweiten Kondensator, einen ersten Schalter und einen zweiten Schalter umfasst, der erste Schalter und der zweite Schalter geschlossen sind, um den LPF einzuschalten, der erste Schalter und der zweite Schalter geöffnet sind, um den LPF auszuschalten, und eine erste Filterfrequenz für den ersten LPF eingestellt ist;
ein Anschluss des ersten Widerstands mit einem Ausgangsanschluss des ersten Operationsverstärkers verbunden ist, das andere Ende des ersten Widerstands mit einem Ende des ersten Kondensators verbunden ist, das andere Ende des ersten Kondensators mit einem Ende des ersten Schalters verbunden ist und das andere Ende des ersten Schalters mit der stabilen Spannungsquelle verbunden ist; und
ein Ende des zweiten Widerstands mit einem Ausgangsanschluss des zweiten Operationsverstärkers verbunden ist, das andere Ende des zweiten Widerstands mit einem Ende des zweiten Kondensators verbunden ist, das andere Ende des zweiten Kondensators mit einem Ende des zweiten Schalters verbunden ist, und das andere Ende des zweiten Schalters mit der stabilen Spannungsquelle verbunden ist.

14. Verfahren nach Anspruch 13, wobei das Herausfiltern eines Signals mit einer Frequenz, die größer als die Filterfrequenz ist, aus dem ersten Signal unter Verwendung eines LPF, um ein zweites Signal zu erhalten, umfasst:
Bestimmen der Filterfrequenz basierend auf einem Übertragungsfrequenzband für das erste Signal, wobei die Filterfrequenz größer oder gleich einer höchsten Frequenz des Übertragungsfrequenzbands ist; und
Einschalten des LPF entsprechend der Filterfrequenz und Filtern des ersten Signals, um das zweite Signal zu erhalten.

## Revendications

1. Appareil d'envoi, comprenant une extrémité frontale analogique, AFE, et un module de commande de ligne, LD, dans lequel une borne de sortie de l'AFE est connectée à une borne d'entrée du module de LD, l'AFE comprend au moins un filtre passe-bas, LPF, et une fréquence de filtrage est réglée pour chaque LPF ;
l'AFE est configurée pour obtenir un premier signal, et filtrer, en utilisant le LPF, un signal avec une fréquence supérieure à la fréquence de filtrage du premier signal, pour obtenir un deuxième signal ; et
le module de LD est configuré pour recevoir le deuxième signal ; dans lequel l'AFE comprend un premier LPF, une source de tension stable, un premier amplificateur opérationnel et un deuxième amplificateur opérationnel ;
le premier LPF comprend une première résistance, une deuxième résistance, un premier condensateur, un deuxième condensateur, un premier commutateur et un deuxième commutateur, le premier commutateur et le deuxième commutateur sont fermés pour activer le premier LPF, le premier commutateur et le deuxième commutateur sont ouverts pour désactiver le premier LPF, et une première fréquence de filtrage est réglée pour le premier LPF ; une borne de la première résistance est connectée à une borne de sortie du premier amplificateur opérationnel, l'autre extrémité de la première résistance est connectée à une extrémité du premier condensateur, l'autre extrémité du premier condensateur est connectée à une extrémité du premier commutateur, et l'autre extrémité du premier commutateur est connectée à la source de tension stable ; et
une extrémité de la deuxième résistance est connectée à une borne de sortie du deuxième amplificateur opérationnel, l'autre extrémité de la deuxième résistance est connectée à une extrémité du deuxième condensateur, l'autre extrémité du deuxième condensateur est connectée à une extrémité du deuxième commutateur, et l'autre extrémité du deuxième commutateur est connectée à la source de tension stable.

2. Appareil d'envoi selon la revendication 1, dans lequel l'AFE comprend un deuxième LPF, un premier amplificateur opérationnel et un deuxième amplificateur opérationnel ;
le deuxième LPF comprend une première résistance, une deuxième résistance, un troisième condensateur et un troisième commutateur, le troisième commutateur est fermé pour activer le deuxième LPF, le troisième commutateur est ouvert pour désactiver le deuxième LPF, et une deuxième fréquence de filtrage est réglée pour le deuxième LPF ; et
une extrémité de la première résistance est connectée à une borne de sortie du premier amplificateur opérationnel, l'autre extrémité de la première résistance est connectée à une extrémité du troisième condensateur, l'autre extrémité du troisième condensateur est connectée à une extrémité du troisième commutateur, l'autre extrémité du troisième commutateur est connectée à une extrémité de la deuxième résistance, et l'autre extrémité de la deuxième résistance est connectée à une borne de sortie du deuxième amplificateur opérationnel.

3. Appareil d'envoi selon la revendication 1, dans lequel l'AFE comprend en outre un troisième LPF ;
le troisième LPF comprend la première résistance, la deuxième résistance et un quatrième condensateur, et une troisième fréquence de filtrage est réglée pour le troisième LPF ;
la borne de la première résistance est connectée à la borne de sortie du premier amplificateur opérationnel, l'autre extrémité de la première résistance est connectée à la borne du premier condensateur, dans lequel un point de connexion est connecté à une extrémité du quatrième condensateur, l'autre extrémité du premier condensateur est connectée à la borne du premier commutateur, et l'autre extrémité du premier commutateur est connectée à la source de tension stable ; et
la borne de la deuxième résistance est connectée à la borne de sortie du deuxième amplificateur opérationnel, l'autre extrémité de la deuxième résistance est connectée à la borne du deuxième condensateur, dans lequel un point de connexion est connecté à l'autre extrémité du quatrième condensateur, l'autre extrémité du deuxième condensateur est connectée à la borne du deuxième commutateur, et l'autre extrémité du deuxième commutateur est connectée à la source de tension stable.

4. Appareil d'envoi selon la revendication 2, dans lequel l'AFE comprend en outre un troisième LPF ;
le troisième LPF comprend la première résistance, la deuxième résistance et un quatrième condensateur, et une troisième fréquence de filtrage est réglée pour le troisième LPF ; et
la borne de la première résistance est connectée à la borne de sortie du premier amplificateur opérationnel, l'autre extrémité de la première résistance est connectée à la borne du troisième condensateur, dans lequel un point de connexion est connecté à une extrémité du quatrième condensateur, l'autre extrémité du troisième condensateur est connectée à la borne du troisième commutateur, l'autre extrémité du troisième commutateur est connectée à la borne de la deuxième résistance, dans lequel un point de connexion est connecté à l'autre extrémité du quatrième condensateur, et l'autre extrémité de la deuxième résistance est connectée à la borne de sortie du deuxième amplificateur opérationnel.

5. Appareil d'envoi selon l'une quelconque des revendications 1 à 4, dans lequel le module de LD comprend un troisième amplificateur opérationnel, un quatrième amplificateur opérationnel, une troisième résistance, un quatrième LPF et un cinquième LPF ;
le quatrième LPF comprend une quatrième résistance, un cinquième condensateur et un quatrième commutateur, le quatrième commutateur est fermé pour activer le quatrième LPF, le quatrième commutateur est ouvert pour désactiver le quatrième LPF, et une quatrième fréquence de filtrage est réglée pour le quatrième LPF ;
le cinquième LPF comprend une cinquième résistance, un sixième condensateur et un cinquième commutateur, le cinquième commutateur est fermé pour activer le cinquième LPF, le cinquième commutateur est ouvert pour désactiver le cinquième LPF, et une cinquième fréquence de filtrage est réglée pour le cinquième LPF ;
une borne de sortie du troisième amplificateur opérationnel est connectée à une extrémité de la quatrième résistance, dans lequel un point de connexion est connecté à une extrémité du cinquième condensateur, l'autre extrémité de la quatrième résistance est connectée à une borne d'entrée du troisième amplificateur opérationnel, dans lequel un point de connexion est connecté à une extrémité du quatrième commutateur et à une extrémité de la troisième résistance, et l'autre extrémité du quatrième commutateur est connectée à l'autre extrémité du cinquième condensateur ; et
une borne de sortie du quatrième amplificateur opérationnel est connectée à une extrémité de la cinquième résistance, dans lequel un point de connexion est connecté à une extrémité du sixième condensateur, l'autre extrémité de la cinquième résistance est connectée à une borne d'entrée du quatrième amplificateur opérationnel, dans lequel un point de connexion est connecté à une extrémité du cinquième commutateur et à l'autre extrémité de la troisième résistance, et l'autre extrémité du cinquième commutateur est connectée à l'autre extrémité du sixième condensateur.

6. Appareil d'envoi selon la revendication 5, dans lequel le module de LD comprend en outre un sixième LPF et un septième LPF ;
le sixième LPF comprend la quatrième résistance et un septième condensateur, et une sixième fréquence de filtrage est réglée pour le sixième LPF ;
le septième LPF comprend la cinquième résistance et un huitième condensateur, et une septième fréquence de filtrage est réglée pour le septième LPF ;
la borne de sortie du troisième amplificateur opérationnel est connectée à la borne de la quatrième résistance, dans lequel le point de connexion est connecté à la borne du cinquième condensateur et à une extrémité du septième condensateur, l'autre extrémité de la quatrième résistance est connectée à la borne d'entrée du troisième amplificateur opérationnel, dans lequel le point de connexion est connecté à la borne du quatrième commutateur, à la borne de la troisième résistance et à l'autre extrémité du septième condensateur, et l'autre extrémité du quatrième commutateur est connectée à l'autre extrémité du cinquième condensateur ; et
la borne de sortie du quatrième amplificateur opérationnel est connectée à la borne de la cinquième résistance, dans lequel le point de connexion est connecté à la borne du sixième condensateur et à une extrémité du huitième condensateur, l'autre extrémité de la cinquième résistance est connectée à la borne d'entrée du quatrième amplificateur opérationnel, dans lequel le point de connexion est connecté à la borne du cinquième commutateur, à l'autre extrémité de la troisième résistance et à l'autre extrémité du huitième condensateur, et l'autre extrémité du cinquième commutateur est connectée à l'autre extrémité du sixième condensateur.

7. Appareil d'envoi, comprenant une extrémité frontale analogique, AFE, et un module de commande de ligne, LD, dans lequel une borne de sortie de l'AFE est connectée à une borne d'entrée du module de LD, le module de LD comprend au moins un filtre passe-bas, LPF, et une fréquence de filtrage est réglée pour chaque LPF ;
l'AFE est configurée pour obtenir un premier signal, et envoyer le premier signal au module de LD ; et
le module de LD est configuré pour recevoir le premier signal, et filtrer, en utilisant le LPF, un signal avec une fréquence supérieure à la fréquence de filtrage du premier signal, pour obtenir un deuxième signal ;
dans lequel l'AFE comprend un premier LPF, une source de tension stable, un premier amplificateur opérationnel et un deuxième amplificateur opérationnel ;
le premier LPF comprend une première résistance, une deuxième résistance, un premier condensateur, un deuxième condensateur, un premier commutateur et un deuxième commutateur, le premier commutateur et le deuxième commutateur sont fermés pour activer le premier LPF, le premier commutateur et le deuxième commutateur sont ouverts pour désactiver le premier LPF, et une première fréquence de filtrage est réglée pour le premier LPF ; une borne de la première résistance est connectée à une borne de sortie du premier amplificateur opérationnel, l'autre extrémité de la première résistance est connectée à une extrémité du premier condensateur, l'autre extrémité du premier condensateur est connectée à une extrémité du premier commutateur, et l'autre extrémité du premier commutateur est connectée à la source de tension stable ; et
une extrémité de la deuxième résistance est connectée à une borne de sortie du deuxième amplificateur opérationnel, l'autre extrémité de la deuxième résistance est connectée à une extrémité du deuxième condensateur, l'autre extrémité du deuxième condensateur est connectée à une extrémité du deuxième commutateur, et l'autre extrémité du deuxième commutateur est connectée à la source de tension stable.

8. Appareil d'envoi selon la revendication 7, dans lequel le module de LD comprend un troisième amplificateur opérationnel, un quatrième amplificateur opérationnel, une troisième résistance, un quatrième LPF et un cinquième LPF ;
le quatrième LPF comprend une quatrième résistance, un cinquième condensateur et un quatrième commutateur, le quatrième commutateur est fermé pour activer le quatrième LPF, le quatrième commutateur est ouvert pour désactiver le quatrième LPF, et une quatrième fréquence de filtrage est réglée pour le quatrième LPF ;
le cinquième LPF comprend une cinquième résistance, un sixième condensateur et un cinquième commutateur, le cinquième commutateur est fermé pour activer le cinquième LPF, le cinquième commutateur est ouvert pour désactiver le cinquième LPF, et une cinquième fréquence de filtrage est réglée pour le cinquième LPF ;
une borne de sortie du troisième amplificateur opérationnel est connectée à une extrémité de la quatrième résistance, dans lequel un point de connexion est connecté à une extrémité du cinquième condensateur, l'autre extrémité de la quatrième résistance est connectée à une borne d'entrée du troisième amplificateur opérationnel, dans lequel un point de connexion est connecté à une extrémité du quatrième commutateur et à une extrémité de la troisième résistance, et l'autre extrémité du quatrième commutateur est connectée à l'autre extrémité du cinquième condensateur ; et
une borne de sortie du quatrième amplificateur opérationnel est connectée à une extrémité de la cinquième résistance, dans lequel un point de connexion est connecté à une extrémité du sixième condensateur, l'autre extrémité de la cinquième résistance est connectée à une borne d'entrée du quatrième amplificateur opérationnel, dans lequel un point de connexion est connecté à une extrémité du cinquième commutateur et à l'autre extrémité de la troisième résistance, et l'autre extrémité du cinquième commutateur est connectée à l'autre extrémité du sixième condensateur.

9. Appareil d'envoi selon la revendication 8, dans lequel le module de LD comprend en outre un sixième LPF et un septième LPF ;
le sixième LPF comprend la quatrième résistance et un septième condensateur, et une sixième fréquence de filtrage est réglée pour le sixième LPF ;
le septième LPF comprend la cinquième résistance et un huitième condensateur, et une septième fréquence de filtrage est réglée pour le septième LPF ;
la borne de sortie du troisième amplificateur opérationnel est connectée à la borne de la quatrième résistance, dans lequel le point de connexion est connecté à la borne du cinquième condensateur et à une extrémité du septième condensateur, l'autre extrémité de la quatrième résistance est connectée à la borne d'entrée du troisième amplificateur opérationnel, dans lequel le point de connexion est connecté à la borne du quatrième commutateur, à la borne de la troisième résistance et à l'autre extrémité du septième condensateur, et l'autre extrémité du quatrième commutateur est connectée à l'autre extrémité du cinquième condensateur ; et
la borne de sortie du quatrième amplificateur opérationnel est connectée à la borne de la cinquième résistance, dans lequel le point de connexion est connecté à la borne du sixième condensateur et à une extrémité du huitième condensateur, l'autre extrémité de la cinquième résistance est connectée à la borne d'entrée du quatrième amplificateur opérationnel, dans lequel le point de connexion est connecté à la borne du cinquième commutateur, à l'autre extrémité de la troisième résistance et à l'autre extrémité du huitième condensateur, et l'autre extrémité du cinquième commutateur est connectée à l'autre extrémité du sixième condensateur.

10. Appareil d'envoi selon l'une quelconque des revendications 7 à 9, dans lequel l'AFE comprend un premier LPF, une source de tension stable, un premier amplificateur opérationnel et un deuxième amplificateur opérationnel ;
le premier LPF comprend une première résistance, une deuxième résistance, un premier condensateur, un deuxième condensateur, un premier commutateur et un deuxième commutateur, le premier commutateur et le deuxième commutateur sont fermés pour activer le premier LPF, le premier commutateur et le deuxième commutateur sont ouverts pour désactiver le premier LPF, et une première fréquence de filtrage est réglée pour le premier LPF ; une extrémité de la première résistance est connectée à une borne de sortie du premier amplificateur opérationnel, l'autre extrémité de la première résistance est connectée à une extrémité du premier condensateur, l'autre extrémité du premier condensateur est connectée à une extrémité du premier commutateur, et l'autre extrémité du premier commutateur est connectée à la source de tension stable ; et
une extrémité de la deuxième résistance est connectée à une borne de sortie du deuxième amplificateur opérationnel, l'autre extrémité de la deuxième résistance est connectée à une extrémité du deuxième condensateur, l'autre extrémité du deuxième condensateur est connectée à une extrémité du deuxième commutateur, et l'autre extrémité du deuxième commutateur est connectée à la source de tension stable.

11. Appareil d'envoi selon l'une quelconque des revendications 7 à 9, dans lequel l'AFE comprend un deuxième LPF, un premier amplificateur opérationnel et un deuxième amplificateur opérationnel ;
le deuxième LPF comprend une première résistance, une deuxième résistance, un troisième condensateur et un troisième commutateur, le troisième commutateur est fermé pour activer le deuxième LPF, le troisième commutateur est ouvert pour désactiver le deuxième LPF, et une deuxième fréquence de filtrage est réglée pour le deuxième LPF ; et
une extrémité de la première résistance est connectée à une borne de sortie du premier amplificateur opérationnel, l'autre extrémité de la première résistance est connectée à une extrémité du troisième condensateur, l'autre extrémité du troisième condensateur est connectée à une extrémité du troisième commutateur, l'autre extrémité du troisième commutateur est connectée à une extrémité de la deuxième résistance, et l'autre extrémité de la deuxième résistance est connectée à une borne de sortie du deuxième amplificateur opérationnel.

12. Appareil d'envoi selon la revendication 10, dans lequel l'AFE comprend en outre un troisième LPF :
le troisième LPF comprend la première résistance, la deuxième résistance et un quatrième condensateur, et une troisième fréquence de filtrage est réglée pour le troisième LPF ;
la borne de la première résistance est connectée à la borne de sortie du premier amplificateur opérationnel, l'autre extrémité de la première résistance est connectée à la borne du premier condensateur, dans lequel un point de connexion est connecté à une extrémité du quatrième condensateur, l'autre extrémité du premier condensateur est connectée à la borne du premier commutateur, et l'autre extrémité du premier commutateur est connectée à la source de tension stable ; et
la borne de la deuxième résistance est connectée à la borne de sortie du deuxième amplificateur opérationnel, l'autre extrémité de la deuxième résistance est connectée à la borne du deuxième condensateur, dans lequel un point de connexion est connecté à l'autre extrémité du quatrième condensateur, l'autre extrémité du deuxième condensateur est connectée à la borne du deuxième commutateur, et l'autre extrémité du deuxième commutateur est connectée à la source de tension stable.

13. Procédé de transmission de signal, comprenant :
l'obtention (1101) d'un premier signal ;
le filtrage, en utilisant un filtre passe-bas, LPF, d'un signal avec une fréquence supérieure à la fréquence de filtrage du premier signal, pour obtenir un deuxième signal, dans lequel la fréquence de filtrage est réglée pour le LPF ; et
la livraison en sortie du deuxième signal ;
dans lequel le procédé comprend l'utilisation d'une source de tension stable, d'un premier amplificateur opérationnel et d'un deuxième amplificateur opérationnel ;
dans lequel, le LPF comprend une première résistance, une deuxième résistance, un premier condensateur, un deuxième condensateur, un premier commutateur et un deuxième commutateur, le premier commutateur et le deuxième commutateur sont fermés pour activer le LPF, le premier commutateur et le deuxième commutateur sont ouverts pour désactiver le LPF, et une première fréquence de filtrage est réglée pour le premier LPF ;
une borne de la première résistance est connectée à une borne de sortie du premier amplificateur opérationnel, l'autre extrémité de la première résistance est connectée à une extrémité du premier condensateur, l'autre extrémité du premier condensateur est connectée à une extrémité du premier commutateur, et l'autre extrémité du premier commutateur est connectée à la source de tension stable ; et
une extrémité de la deuxième résistance est connectée à une borne de sortie du deuxième amplificateur opérationnel, l'autre extrémité de la deuxième résistance est connectée à une extrémité du deuxième condensateur, l'autre extrémité du deuxième condensateur est connectée à une extrémité du deuxième commutateur, et l'autre extrémité du deuxième commutateur est connectée à la source de tension stable.

14. Procédé selon la revendication 13, dans lequel le filtrage, en utilisant un LPF, d'un signal avec une fréquence supérieure à la fréquence de filtrage du premier signal, pour obtenir un deuxième signal comprend :
la détermination de la fréquence de filtrage sur la base d'une bande de fréquences de transmission pour le premier signal, dans lequel la fréquence de filtrage est supérieure ou égale à une fréquence la plus élevée de la bande de fréquences de transmission ; et
l'activation du LPF correspondant à la fréquence de filtrage, et le filtrage du premier signal pour obtenir le deuxième signal.
